# EUROPÄISCHE PATENTSCHRIFT

(11) **EP 4 342 034 B1**
(45) Veröffentlichungstag und Bekanntmachung des Hinweises auf die Patenterteilung: **08.07.2026**
(21) Anmeldenummer: 22728486.6
(22) Anmeldetag: 10.05.2022
(51) Int. Cl.: H01R 13/405, H01R 13/73, H05K 5/00, B29C 45/14

(54) **STECKERELEMENT UND ELEKTRONIKMODUL**
PLUG ELEMENT AND ELECTRONIC MODULE
ÉLÉMENT DE FICHE ET MODULE ÉLECTRONIQUE

(30) Priorität: 18.05.2021 DE 102021205038
(43) Veröffentlichungstag der Anmeldung: 27.03.2024
(73) Patentinhaber: Robert Bosch GmbH, 70442 Stuttgart (DE)
(72) Erfinder: FLEISCHMANN, Martin, 71083 Herrenberg (DE)
(86) Internationale Anmeldenummer: PCT/EP2022/062557
(87) Internationale Veröffentlichungsnummer: WO 2022/243098

(56) Entgegenhaltungen:
- EP-A1- 1 150 392
- EP-A2- 0 717 464
- EP-A2- 0 907 219
- DE-A1- 102013 215 369
- DE-A1- 102016 211 637
- US-A- 3 770 878
- US-A1- 2010 317 228
- US-A1- 2021 143 573

## Beschreibung

Die Erfindung betrifft ein Steckerelement, ein Elektronikmodul umfassend das Steckerelement sowie ein Verfahren zur Ausbildung des Elektronikmodules gemäß dem Oberbegriff der unabhängigen Ansprüche.

### Stand der Technik

Elektronische Schaltungen müssen gegen äußere Einflüsse und mechanische Beschädigung geschützt werden. Im Gegensatz zu konventionellen Gehäusen, beispielsweise aus Aluminium oder Kunststoff, bietet die sogenannte Direktverpackung neben dem exzellenten Schutz vor Medien zusätzlich eine thermomechanische Stabilisierung der Bauelemente und der Lötstellen bei einer Temperaturbeanspruchung. Für die Direktverpackung kommen duroplastische Materialien zur Verwendung, welche während dem Umhausungsprozess chemisch vernetzen und aus einem flüssigen Zustand in einen festen Zustand übergehen. Duroplaste bestehen aus kleinen Molekülen, welche bei der Vernetzung (im Normalfall unter Wärmeeinwirkung) zu einem unendlichen dreidimensionalen Netzwerk vernetzen und anschließend nicht mehr schmelzbar sind. Thermoplaste bestehen hingegen aus langen Molekülketten, welche unter Wärmeeintrag beweglich werden und schmelzbar sind. Die Verwendung von Thermoplasten ist sehr weit verbreitet für die Herstellung jeglicher Spritzgussteile. Gerade für elektronische Geräte, insbesondere mit einem konventionellen Gehäuse, sind Stecker aus einem Thermoplasten in jeglichen Dimensionen im Einsatz, beispielsweise in einer Vielzahl von Steuergeräten. Eine Verwendung von diesen etablierten Steckerkonzepten für direktverpackte Elektronikmodule ist technisch schwierig umzusetzen, insbesondere bei mehrpoligen Steckern aufgrund ihrer Größe.

In DE10 2016 211 637 A1 etwa wird ein Elektronikmodul gemäß dem Stand der Technik offenbart, welches einen bestückten Schaltungsträger und ein Steckerelement umfasst. Dabei ist das Steckerelement mit seiner Anschlussseite elektrisch mit dem Schaltungsträger kontaktiert und der Schaltungsträger sowie die Kontaktelemente sind unter Ausbildung einer Umhausung des Elektronikmoduls auf der Anschlussseite des Steckerelements von einer Umhüllungsmasse - insbesondere vollständig - überdeckt. Eine Direktverpackung von Elektronikmodulen ist durch ein solches Steckerkonzept nicht sicher zugänglich gemacht. Ein weiteres Steckerelement ist aus der DE 10 2013 215 369 A1 bekannt.

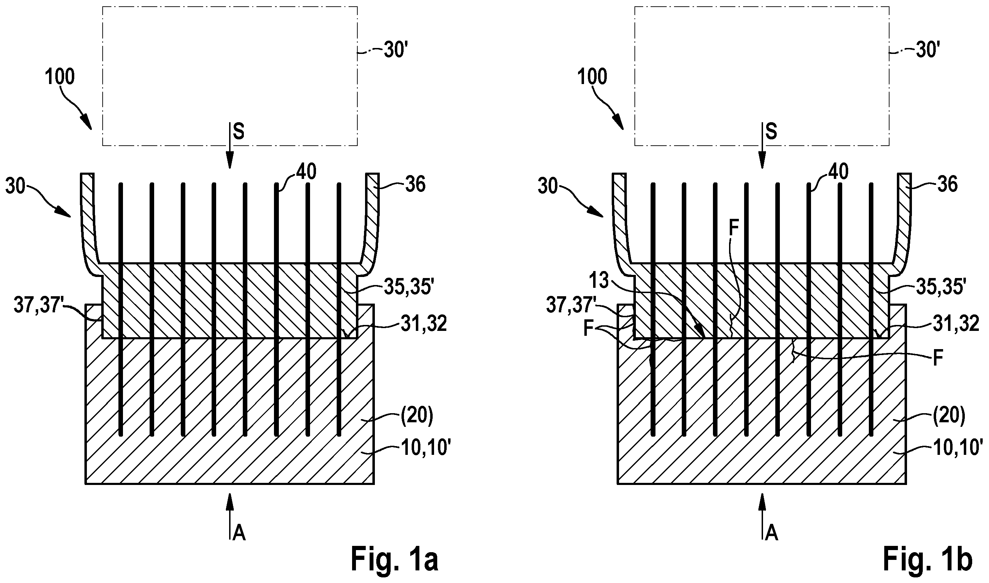

Die Problemstellung lässt sich anhand der Fig. 1a und Fig. 1b einfach aufzeigen. In der Fig. 1a ist sehr schematisch ein Elektronikmodul 100 mit einer Direktverpackung in einer seitlichen Schnittdarstellung gezeigt. Die Direktverpackung ist aus einem Duroplastmaterial 10', welche in einem Vergussprozess die Umhausung 10 des Elektronikmodules 100 ausbildet. Das Elektronikmodul 100 umfasst auch einen Stecker 30, rein beispielhaft einen 8-poligen Stecker 30. Der Stecker 30 weist dabei eine Steckseite S auf zur elektrischen Kontaktierung mit einem Gegenstecker 30' (gestrichelt dargestellt). Ferner ist am Stecker 30 auch eine Anschlussseite A ausgebildet zur elektrischen Kontaktierung des Steckers 30 mit einem bestückten Schaltungsträger 20 (nicht sichtbar, da als vollständig überdeckt von dem Duroplastmaterial 10' dargestellt), beispielsweise mit dem im Elektronikmodul 100 enthaltenden Schaltungsträger 20. Zur jeweiligen elektrischen Kontaktierung umfasst der Stecker 30 mehrere Kontaktelemente 40, welche zwischen der Steckseite S und der Anschlussseite A von einem elektrisch isolierenden Steckerkörper 35 aus einem Thermoplastmaterial 35' dichtend umschlossen sind. Die Kontaktelemente 40 stehen dabei endseitig von dem Steckerkörper 35 ab. Auf der Steckseite S sind die endseitig abstehenden Kontaktelemente 40 oft von einem Steckerkragen 36 als Teil des Steckerkörpers 35 umrahmt. Dieser berandet dann auch eine Steckergrundfläche 31, welche von den Kontaktelementen 40 durchdrungen ist. Die abstehenden Kontaktelemente 40 auf der Anschlussseite A können gerade herausgeführt sein, so dass insgesamt ein gerader Stecker 30 vorliegt. Sie können ebenso in eine Richtung abgeknickt sein zur Darstellung eines gewinkelten Steckers 30. Die Steckseite S ist damit parallel zu einer Hauptseite des Schaltungsträgers 20 orientiert, während die Anschlussseite A in einem Winkel, insbesondere einem rechten Winkel, zur Hauptseite zeigt. Die Kontaktelemente 40 auf der Anschlussseite A sind vollständig von dem Duroplastmaterial 10' der Umhausung 10 überdeckt. Zusätzlich ist der Steckerkörper 35 aus Thermoplastmaterial 35' zumindest bereichsweise von dem Duroplastmaterial 10' der Umhausung 10 umgossen. Dabei umschließt das Duroplastmaterial 10' vollständig einen Randbereich des Steckerkörpers 35, umfassend eine der Steckergrundfläche 31 gegenüberliegende Abschlussgrundfläche 32 sowie einen Seitenabschnitt 37' der daran anschließenden Seitenfläche 37 des Steckerkörpers 35. Im umgossenen Randbereich liegt dann eine große Grenzfläche vor, an der das Thermoplastmaterial 35' und das Duroplastmaterial 10' direkt aufeinanderstoßen. Dabei ist ein stofflicher Anbindungsbereich 13 ausgebildet als ein Stoffschluss aus beiden Materialien 10', 35', welcher aus einem Verguss des Duroplastmaterials 10 und einer anschließenden Verfestigung resultiert. In der realen Herstellung eines solchen Elektronikmodules 100 bauen sich immense thermomechanische Spannungen im Anbindungsbereich 13 auf. Für einen Vergussprozess werden vorgefertigte Stecker 30 aus dem Thermoplastmaterial 35' verwendet. Bei einer beispielhaften Prozesstemperatur für das Duroplastmaterial 10' von ~175°C in einem Transfermold- oder DIM-Prozess (Direct Injection Molding) als beispielhafte Vergussprozesse, härtet das Duroplastmaterial 10' aus und geht vom flüssigen in den festen Zustand über. Bei dieser Temperatur geht man davon aus, dass die Verbindung von dem Duroplastmaterial 10' und dem Thermoplastmaterial 35' annähernd spannungsfrei ist. Duroplastmaterialien 10' weisen einen deutlich kleineren thermischen Ausdehnungskoeffizienten auf (ca. 11-17 ppm/K) als Thermoplastematerialien 35' (ca. 30-60 ppm/K). Dies hat zur Folge, dass sich während der Abkühlung nach dem Vergussprozess das Thermoplastmaterial 35' deutlich stärker zusammenzieht als das Duroplastmaterial 10' - allgemein auch als thermisches Schrumpfen bekannt. Dieser Unterschied im thermischen Schrumpf führt zu großen mechanischen Spannungen an der Verbindung zwischen dem Thermoplastmaterial 35' und dem Duroplastmaterial 10'. So entstehen in der Grenzfläche zur Abschlussgrundfläche 32 Scherspannungen, in der Grenzfläche zum Seitenabschnitt 37' Zugkräfte. Sobald die Belastung an der Grenzfläche die Belastbarkeit der einzelnen Materialien 10', 35° übersteigt, können beide Materialien 10', 35' reißen. In Fig. 1b sind schematisch einige Fehlerstellen F beispielhaft markiert. Ebenso kann es zu einer Delamination zwischen dem Thermoplastmaterial 35' und dem Duroplastmaterial 10' als einer weiteren Fehlerstelle F führen. Diese Delamination kann in der Folge auch weiterwachsen und zu einer Delamination von den Kontaktelementen 40 führen. Die Risse können sowohl zur mechanischen Beschädigung von weiteren Bauteilen führen als auch als Eindringpfade für Feuchtigkeit und andere Medien dienen. Damit sind mögliche Folgen wie Korrosion und elektrische Fehlfunktionen des Schaltungsträgers 20 absehbar. Gleiche Problemstellungen ergeben sich auch bei anderen Materialpaarungen mit deutlich unterschiedlichen thermischen Ausdehnungskoeffizienten. Die Problemstellung erhöht sich drastisch mit zunehmender Steckergröße. Gerade große Baugrößen von Stecker 30 aus Thermoplasten, und somit insbesondere dann mehrpolige Stecker, führen in der Verwendung für oben beschriebene Elektronikmodule 100 aufgrund der dann großen Schrumpfmaße mit bisherigen Mitteln zwangsläufig zu schrumpfbedingten Fehlerstellen F innerhalb des Elektronikmodules 100.

### Offenbarung der Erfindung

### Vorteile

Der Erfindung liegt die Aufgabe zugrunde, etablierte Steckerkonzepte für eine Direktverpackung von Elektronikmodulen sicher zugänglich zu machen.

Diese Aufgabe wird durch ein Steckerelement, ein Elektronikmodul umfassend das Steckerelement sowie ein Verfahren zur Ausbildung des Elektronikmodules gemäß den unabhängigen Ansprüchen gelöst.

Ausgegangen wird von einem Steckerelement mit einer Steckseite zur elektrischen Kontaktierung mit einem Gegenstecker und mit einer Anschlussseite zur elektrischen Kontaktierung eines Schaltungsträgers. Das Steckerelement ist mehrpolig ausgebildet, umfassend zumindest vier oder mehr Kontaktelemente, insbesondere mehr als fünf Kontaktelemente, bevorzugt mehr als sieben Kontaktelemente, für die jeweilige elektrische Kontaktierung. Die zumindest vier oder mehr Kontaktelemente sind dabei zwischen der Steckseite und der Anschlussseite von einem elektrisch isolierenden Steckerkörper dichtend umschlossen. Sie stehen jeweils endseitig vom Steckerkörper frei ab. Ferner durchdringen die Kontaktelemente auf der Steckseite eine vom Steckerkörper gebildete Steckergrundfläche. Die Steckergrundfläche kann beispielsweise von einem Steckerkragen zur Aufnahme des Gegensteckers berandet sein. Zur Verbesserung eines spannungsarmen Umgießens des Steckerkörpers mit einer andersartigen Umhüllungsmasse, weist der Steckerkörper auf der Anschlussseite zumindest einen oder weitere abstehende Dome und/oder Stege auf. Mit andersartiger Umhüllungsmasse ist gemeint, dass das Material der Umhüllungsmasse einen deutlich abweichenden thermischen Ausdehnungskoeffizienten aufweist, als das Material des Steckerkörpers, beispielsweise mit einem deutlich kleineren thermischen Ausdehnungskoeffizienten. Dies ist insbesondere der Fall bei einer duroplastischen Umhüllungsmasse und einem thermoplastischen Steckerkörper. Der zumindest eine oder weitere Dome und/oder Stege bilden dabei endseitig jeweils eine Abschlussfläche des Steckerkörpers aus. Alle Kontaktelemente erstrecken sich ferner über einen jeweiligen Längsabschnitt innerhalb des einen oder weiteren Dome und/oder Stege und durchdringen dabei jeweils zumindest die eine oder weitere Abschlussflächen. Der zumindest eine oder weitere Dome und/oder Stege ist/sind derart ausgebildet, einen Anbindungsbereich des Steckerelements für eine Umhüllungsmasse bereitzustellen, um den Steckerkörper in einem kontaktierten Zustand des Steckerelements mit dem Schaltungsträger stoffschlüssig an eine Umhausung des Schaltungsträgers aus der Umhüllungsmasse anzubinden. Die Anbindbarkeit einer Umhüllungsmasse nur an den zumindest einen oder weitere Dome und/oder Stege kann vorteilhaft die Grenzfläche zwischen dem Material des Steckerkörpers, insbesondere ein Thermoplastmaterial, und dem Material der Umhüllungsmasse, insbesondere einem Duroplastmaterial, deutlich verringern. Aufgrund der kleineren Anbindungsflächen kann bei Verguss eines solchen Steckerelements mit einer andersartigen Umhüllungsmasse der thermomechanische Stress zwischen den unterschiedlichen Materialien nachweislich gesenkt werden. Insbesondere wenn der Anbindungsbereich endseitig von der jeweiligen Abschlussfläche nicht über die gesamte Höhe des jeweiligen Domes und/oder Steges reicht, kann der verbleibende Höhenrest, welcher frei von einer Anbindung mit der Umhüllungsmasse bleibt, als elastisch nachgiebiges Federelement wirken. Bei einem thermischen Schrumpfen können dann vorteilhaft ansonsten entstehende thermomechanische Spannungen durch die Nachgiebigkeit dieser wirksamen Federelemente abgebaut bzw. zu einem großen Teil kompensiert werden. Insgesamt kann damit erreicht werden, dass dann Belastungen zwischen dem Material des Steckerkörpers und der Umhüllungsmasse unterhalb ihrer jeweiligen Belastungsgrenzen bleiben. Somit können nun mit großem Vorteil etablierte Steckerkonzepte, insbesondere mit thermoplastischem Steckerkörper, für eine Direktverpackung von Elektronikmodulen, insbesondere mit einer duroplastischen Umhüllungsmasse, Anwendung finden. Deutlich unabhängiger von der Steckerbaugröße können nun mediendichte Verbindungen bei einem Mitverguss dieser Steckerelemente mit der verwendeten Umhüllungsmasse erreicht werden. Damit können auch komplexere Elektronikmodule, insbesondere Steuergeräte im Kfz-Bereich, welche in der Regel größere, insbesondere mehrpolige Steckerelemente, insbesondere Messerleisten, erfordern, nun auch mit einer Direktverpackung als Umhausung ausgeführt werden. Damit stellen sie technisch und kostenmäßig eine attraktive Alternative zu ansonsten verwendeten klassischen Gehäusen aus Aluminium oder Kunststoff dar. Durch die Erschließung einer Direktverpackung auch für derartige Elektronikmodule kann im Vergleich zu konventionellen Techniken die Betriebszuverlässigkeit erhöht und der benötigte Bauraum und das Gewicht gesenkt werden.

Insbesondere ist eine Summe aller Abschlussflächen des einen oder weiteren Dome und/oder Stege geringer als die Steckergrundfläche, so dass der Anbindungsbereich geringer ausgeführt werden kann als im Vergleich zu bisherigen Steckerelementen. Weiter insbesondere sind die Abschlussflächen innerhalb einer senkrechten Projektionsfläche der Steckergrundfläche angeordnet. Damit fällt die Anbindungsfläche zwangsläufig immer geringer aus.

Dome können dabei mit verschiedenen Querschnitten ausgeführt werden. Besonders eignen sich runde, abgerundete oder ovale Querschnitte, insbesondere mit gleichbleibendem Querschnitt über ihren Höhenverlauf. Die Dome weisen prinzipiell ein größeres Höhenmaß auf, als ein größtes Querschnittsmaß. Stege dagegen erstrecken sich in einer Längsausrichtung senkrecht zum Höhenmaß mit einem Erstreckungsmaß, welches größer ist als das Höhenmaß. Grundsätzlich können ausschließlich Dome oder ausschließlich Stege für den Anbindungsbereich des Steckerelements ausgebildet sein. Ebenso ist eine Mischung beider Varianten anwendungsspezifisch denkbar. Bevorzugt sind die eine oder weitere Anschlussflächen des zumindest einen oder weiteren Dome und/oder Stege gegenüberliegend zur Steckergrundfläche ausgebildet, insbesondere parallel zu dieser. Dies erleichtert eine Fertigung des Steckerelements. Besondere Eignung findet die Erfindung für umgießbare Steckerelemente mit einer Baugröße >25 mm, beispielsweise >35 mm, insbesondere >45 mm. Die Baugröße orientiert sich hier insbesondere als größtes Abstandsmaß zwischen enthaltenen Kontaktelementen, insbesondere solcher, die von einem gemeinsamen Steckerkragen bzw. einer gemeinsamen Steckergrundfläche umfasst sind.

Durch die in den abhängigen Ansprüchen aufgeführten Maßnahmen sind vorteilhafte Weiterbildungen und Verbesserungen des erfindungsgemäßen Verfahrens möglich.

In einer besonders günstigen Ausführungsform des Steckerelements weist der Steckerkörper eine Mittenachse auf, zu der zwei oder mehr Dome und/oder Stege spiegel- und/oder punktsymmetrisch zur Mittenachse ausgebildet sind. Aufgrund der symmetrischen Anordnung kann sichergestellt werden, dass es bei einem Umgießen nicht zu einem einseitigen Verzug des Steckerelements und nicht zu einem einseitig erhöhten Spannungszustand im Anbindungsbereich kommt.

In einer weiteren besonderen Ausführungsform des Steckerelements ist/sind zumindest ein oder weitere Dome oder Stege ausgebildet, welcher frei von Kontaktelementen ist/sind und ausgebildet ist/sind, beim stoffschlüssigen Anbinden an eine Umhausung des Schaltungsträgers aus der Umhüllungsmasse eine Stützstruktur zu bilden. Derartige Dome oder Stege können beispielsweise weiter außen angeordnet werden, als solche, durch welche sich zumindest ein Kontaktelement erstreckt. Die Stützstruktur unterstützt die Kraftaufnahme von Steckkräften im späteren Betrieb des Steckerelements bzw. eines Elektronikmodules, umfassend das Steckerelement. Besonders vorteilhaft liegen diese Stützstrukturen lediglich im Anlagenkontakt auf dieser Umhausung auf. Beim Umgießen mit der Umhüllungsmasse wird dabei werkzeugseitig ein minimalster Spalt zwischen der Stützstruktur und der Umhausung mit ausgebildet. Alternativ kann die vorgesehene Stützstruktur eine äußere Beschichtung aufweisen, welche eine Adhäsion des Materials des Steckerkörpers an die Umhüllungsmasse verringert bzw. idealerweise verhindert, beispielsweise mittels einer Trennwachsschicht. Durch die fehlende stoffliche Anbindung der Stützstruktur können dann keine schrumpfbedingten Fehlerstellen beim Umgießen mit einer andersartigen Umhüllungsmasse auftreten.

Eine vorteilhafte Ausführungsform des Steckerelements zeigt sich darin, dass sich alle Kontaktelemente zusammen durch genau einen Dom oder Steg erstrecken. Dabei ist der Dom oder Steg insbesondere gegenüberliegend zu einem Mittenbereich der Steckergrundfläche angeordnet. Auf diese Weise müssen bei einem Umgießen mit einer Umhüllungsmasse nur geringe Schrumpfmaße ausgeglichen werden. Damit kann nur ein geringer Spannungszustand nach einem Verguss sichergestellt werden. Das liegt daran, dass eine thermische Schrumpfung aller Bereiche des Steckerkörpers außerhalb des einen Domes oder Steges keinerlei Einfluss nehmen auf die Schrumpfsituation im Anbindungsbereich. Da alle Kontaktelemente innerhalb des einen Domes oder Steges gebündelt werden, müssen die Kontaktelemente innerhalb des Steckerkörpers einen Knickverlauf aufweisen. Bei einer Linienanordnung der Kontaktelemente unterscheiden sich die Kontaktelemente. Die äußeren Kontaktelemente weisen nach einem Knick einen längeren Verlauf bis zu einem weiteren Knick im Dom- bzw. Stegbereich auf, als die weiter innen liegenden Kontaktelemente. Bei einer Kreisanordnung wiederrum können alle Kontaktelement gleich ausgeführt werden.

In einer alternativen Ausführungsform erstrecken sich alle Kontaktelemente einzeln jeweils durch genau einen Dom oder Steg. In dieser Form können zwischen der Steckseite und der Anschlussseite geradlinige Kontaktelemente verwendet werden. Diese können bei einem gewinkelten Stecker nochmals auf der Anschlussseite einen Knick aufweisen. Insgesamt kann bei einem solchen Steckerelement bei der Herstellung des Steckerelements auch die sogenannte Stich-Technik angewendet werden, bei welchen die Kontaktelemente nach einem Spritzen des Steckerkörpers in das noch nicht vollständig verfestigte Material durchgestoßen werden.

In einer weiteren alternativen Ausführungsform des Steckerelements sind zwei oder mehr Dome und/oder Stege ausgebildet, wobei sich durch alle Dome und/oder Stege jeweils mindestens zwei oder mehr Kontaktelemente oder zumindest in einer Teilgruppe umfassend zumindest einen Dom oder Steg sich mindestens zwei oder mehr Kontaktelemente durch jeweils einen Dom oder Steg erstrecken. Dabei weisen zumindest ein oder weitere Kontaktelement innerhalb jeweils eines Domes oder Steges einen lateralen Versatz auf zwischen ihren die Steckergrundfläche und die jeweilige Abschlussfläche durchdringenden Enden. Im Endeffekt entspricht dies wieder Kontaktelementen mit unterschiedlichem Knickverlauf. Allerdings können hier durch Symmetriemaßnahmen mehrere gleichartige Kontaktelemente verwendet werden. Eine Besonderheit stellt hierbei dar, wenn sich jeweils nur zwei Kontaktelemente durch genau einen Dom oder Steg erstrecken, wobei die jeweils zwei Kontaktelement innerhalb eines Domes oder Steges oder alle Kontaktelemente gleich ausgebildet sind. Bevorzugt sind dabei die jeweils zwei Kontaktelement mit entgegengesetztem Versatz ihrer Enden zueinander angeordnet. Damit können also lauter Gleichteile von Kontaktelementen verwendet werden. Allgemein ist es vorteilhaft, dass außenstehende Dome oder Stege gegenüber einer Projektionsfläche der Steckergrundfläche weiter nach innen verschoben angeordnet sind. Damit lässt sich ein positiver Einfluss auf verbleibende Restspannungen bei einem Umgießen mit einer Umhüllungsmasse nehmen.

Besondere Vorteile liegen bei einer Ausführungsform des Steckerelements vor, umfassend drei oder mehr Domen oder Stegen, wobei dann die jeweils weiter außen angeordneten Dome oder Stege bezogen auf die Mittelachse des Steckerkörpers eine höhere Elastizität aufweisen, als die jeweils weiter innen angeordneten Dome oder Stege. Die höhere Elastizität ist bevorzugt bewirkt durch einen geringeren Querschnitt der jeweiligen Dome oder Stege und/oder durch ein größeres Längenmaß der jeweiligen Dome oder Stege und/oder durch eine geringere Anzahl an enthaltenen Kontaktelementen innerhalb der jeweiligen Dome oder Stege und/oder durch einen geringeren Querschnitt der innerhalb der jeweiligen Dome oder Stege angeordneten Kontaktelemente. Weitere wirksame Maßnahmen sind denkbar. Die weiter außen angeordneten Dome oder Stege weisen relativ zur Mittenachse betrachtet größere Schrumpfbewegungen auf, weil sich alle Schrumpfmaße der weiter innen liegenden Bereiche des Steckerkörpers nach außen hin aufaddieren. Durch die erhöhten Elastizitäten können noch größere Stecker für eine Direktverpackung bereitgestellt werden.

In einer günstigen Ausführungsform des Steckerelements sind drei oder mehr Dome und/oder Stege in einem Rasterabstand zur Mittelachse entfernt angeordnet, wobei die jeweils weiter außen angeordneten Dome und/oder Stege mit einem zunehmend kleinerem Rastermaß angeordnet sind. Auf diese Weise können die größeren Schrumpfbewegungen der weiter außen liegenden Bereiche des Steckerkörpers berücksichtigt werden und schrumpfbedingte Spannungszustände minimiert werden. In Hinblick auf die Aufnahme von Steckkräften kann die mechanische Stabilität des Steckerkörpers noch dahingehend optimiert werden, dass insbesondere die außen angeordneten Dome und/oder Stege schräg abstehend ausgeführt sind, so dass ein lateraler Abstand in Bereich der Abschlussflächen größer ist als ein lateraler Abstand im Übergangsbereich der Dome und/oder Stege in den Steckerkörper.

Vorteile zeigen sich in einer Ausführungsform des Steckerelements, bei welcher alle Kontaktelemente auf der Steckseite ein Rastermaß zueinander aufweisen, wobei zwei oder mehr sich durch einen Dom oder Steg erstreckenden Kontaktelemente auf der Anschlussseite ein im Vergleich dazu reduziertes Rastermaß aufweisen. Im Idealfall können die Kontaktelemente auf der Anschlussseite einfach gehalten werden, insbesondere geradlinig - bis auf ggf. einen Knickverlauf für eine gewinkelte Steckerausführung. Damit kann ein Platzbedarf auch auf einem dann elektrisch kontaktierten Schaltungsträger verringert werden. Ebenso lassen sich die Kontaktelemente aber nach Austritt aus den Abschlussflächen der jeweiligen Dome bzw. Stege auch wieder auffächern, indem ein jeweiliger weiterer Knickverlauf vorgesehen ist. Die Auffächerung lässt sich dabei dann auf ein gewünschtes Rastermaß auf der Anschlussseite anpassen. Eine bevorzugte Ausführung sieht ein Rastermaß aller Kontaktelemente auf der Anschlussseite auf, welches dem Rastermaß aller Kontaktelemente auf der Steckseite entspricht. Damit kann ein Elektronikmodul mit einem Stecker und einem konventionellen Gehäusekonzept leicht auf eine Direktverpackung umgestellt werden. Eine Änderung betrifft dann lediglich den Einsatz eines erfindungsgemäßen Steckerelements.

Eine Besonderheit ergibt sich auch bei einer Ausführungsform des Steckerelements, bei welcher das Steckerelement zwei oder mehr, insbesondere parallele Reihen von Kontaktelementen aufweist, wobei eine Reihe von zwei oder mehr Kontaktelementen in einer Linienanordnung oder in einer Kreisanordnung gebildet ist, und wobei innerhalb eines Domes oder Steges sich ausschließlich benachbarte Kontaktelemente aus der gleichen Reihe erstrecken. Alternativ dazu erstrecken sich ausschließlich benachbarte Kontaktelemente aus verschiedenen Reihen. Eine weitere Alternative ergibt sich, wenn sich zumindest zwei benachbarte Kontaktelemente aus der gleichen und zumindest einer weiteren Reihe erstrecken. Insgesamt können damit verschiedenste Steckertypen flexibel für die Eignung eines spannungsarmen Mitvergusses innerhalb einer Direktverpackung angepasst werden.

Weitere Vorteile ergeben sich bei einer Ausführungsform des Steckerelements, wenn an zumindest einem oder allen Domen und/oder Stegen innerhalb des Anbindungsbereichs zumindest ein Verkrallungselement für die Umhüllungsmasse ausgebildet ist. Dies lässt sich insbesondere sehr einfach als eine lokale Erhebung oder Vertiefung an der Seitenfläche des Domes bzw. Steges realisieren. Bei einer Überdeckung mit einer umgossenen Umhüllungsmasse werden damit Hinterschneidungen innerhalb des Grenzflächenverlaufes ausgebildet, wodurch ein Verbund zwischen dem Material des Steckerkörpers und der Umhüllungsmasse verstärkt werden kann. Zusätzlich oder alternativ kann der Anbindungsbereich zur verbesserten Anbindung an eine Umhüllungsmasse plasmabehandelt und/oder mit einer besonders rauhen Oberfläche ausgebildet sein. Ferner ergeben sich Vorteile, wenn außerhalb des Anbindungsbereiches zumindest ein Funktionselement ausgebildet ist. Dies kann insbesondere als ein Befestigungselement ausgebildet sein, um das Steckerelement bzw. bei einem Verguss zu einem Elektronikmodul dieses an einem festgelegten Befestigungsort zu fixieren. Damit können nochmals höhere Steckkräfte im Betrieb des Steckerlements bzw. des Elektronikmodules aufgenommen werden. Ebenso kann das Befestigungselement sinnvolle Anwendung finden zum Befestigen anderer Elemente, beispielsweise einem Typenschild. Ferner kann auch ein Abdichtungselement ausgebildet sein, gegen welches ein Werkzeug bei einem Verguss des Steckerelements mit einer Umhüllungsmasse dichtend abschließen kann.

Die Erfindung führt auch zu einem Elektronikmodul, umfassend einen bestückten Schaltungsträger und ein Steckerelement nach zumindest einer der vorhergehenden Ausführungsformen. Dabei ist das Steckerelement mit seiner Anschlussseite elektrisch mit dem Schaltungsträger kontaktiert. Ferner ist der Schaltungsträger sowie die Kontaktelemente auf der Anschlussseite des Steckerelements von einer Umhüllungsmasse insbesondere vollständig überdeckt unter Ausbildung einer Umhausung des Elektronikmodules. Der zumindest eine oder weitere Dome und/oder Stege des Steckerkörpers ist/sind als ein Anbindungsbereich des Steckerelements zumindest bereichsweise in der Umhüllungsmasse eingebettet. Dadurch ist der Steckerkörper über den Anbindungsbereich stofflich an die Umhausung angebunden.

Hierbei ergeben sich die Vorteile, wie sie bereits für das Steckerelement erläutert wurden. Bevorzugt besteht zwischen weiteren Bereichen des Steckerkörpers auf der Anschlussseite, insbesondere zwischen den Domen und/oder Stege bzw. randseitig zu den äußersten Domen und/oder Stegen, und der Umhüllungsmasse der Umhausung keine stoffliche Anbindung. Damit ist in diesen Bereichen eine Relativbewegung während eines Schrumpfens ermöglicht, so dass diese zu keiner Spannungserhöhung beitragen.

Eine besondere Ausführungsform des Elektronikmoduls ergibt sich dadurch, dass die Umhüllungsmasse endseitig von der jeweiligen Abschlussfläche nur über eine Teilhöhe des zumindest einen oder weiteren Dome oder Stege reicht, wobei zwischen der Umhausung und dem restlichen Steckerkörper ein Spaltabstand besteht. Durch den Spaltabstand ist sichergestellt, dass die Resthöhe des zumindest einen oder weiteren Domen oder Stegen, welcher/welche frei von der Umhüllungsmasse ist/sind, als elastisch nachgiebige Federelemente wirksam sind. Bei einer Schrumpfung nach einem Vergussprozess mit der Umhüllungsmasse können durch die Nachgiebigkeit ansonsten entstehende Spannungen wirkungsvoll verringert bzw. abgebaut werden. Mit höherem Spaltabstand ergibt sich ein höheres Vermögen einer derartigen Nachgiebigkeit. Der Abstand ist bevorzugt > als 1mm, beispielsweise > als 4 mm, insbesondere > 8 mm.

Eine weitere Verbesserung ergibt sich bei einer Ausführungsform des Elektronikmodules, bei welcher die Umhausung mit zunehmender lateraler Entfernung zu einer Mittenachse und/oder einer Mittenebene des Steckerelements einen zunehmend größeren Spaltabstand zum restlichen Steckerkörper aufweist. Hierbei berücksichtigt man den Umstand, dass weiter außenliegende Steckerbereiche die Schrumpfung aller dazu weiter innenliegenden Steckerbereiche additiv summiert erfahren. Insofern ergeben sich in den weiter außenliegende Steckerbereiche höhere Spannungszustände. Dem kann entgegengewirkt werden, indem durch den zunehmenden Spaltabstand immer längere, als Federelemente wirksame Resthöhen des zumindest einen oder weiteren Domen oder Stege verbleiben. Mit der zunehmenden Länge der von Umhüllungsmasse frei bleibenden Resthöhen ergeben sich auch zunehmende Nachgiebigkeiten. Insofern sind die Nachgiebigkeiten an die Spannungssituation entsprechend angepasst. Grundsätzlich können alle Dome oder Stege gleich ausgebildet werden, wobei die innenliegenden Dome oder Stege dann mehr von Umhüllungsmasse überdeckt sind, als die weiter außen angeordneten Dome oder Stege. Ebenso ist es möglich, die Dome und Stege in Berücksichtigung der gewünschten Spaltabstände in ihrer Höhe entsprechend anzupassen. Dabei sind dann alle Dome oder Stege beispielsweise mit dem gleichen Maß von der Umhüllungsmasse überdeckt.

Eine weitere Verbesserung ist bei einer Ausführungsform des Steckerelements gegeben, bei welcher die Umhausung im Bereich zumindest eines zumindest bereichsweise in der Umhüllungsmasse eingebetteten Domes oder Steges zumindest lokal begrenzt vertiefend abgesetzt ist, insbesondere zwischen zwei nächstbenachbarten Domen oder Stegen. Damit vergrößert man die Möglichkeit eines Spannungsabbaus beim Schrumpfen durch zusätzlich vergrößerte Elastizitäten auch auf Seiten der Umhausung.

Die Erfindung führt auch zu einem Verfahren zum Ausbilden eines Elektronikmoduls nach zumindest einer der zuvor beschriebenen Ausführungsformen, mit den nachfolgenden Verfahrensschritten:
a) Elektrisches Kontaktieren der Anschlussseite des Steckerelements mit einem bestückten Schaltungsträger unter Ausbilden einer Modulkontaktanordnung,
b) Einlegen der Modulkontaktanordnung innerhalb einer Kavität eines Werkzeuges, wobei die Kavität eine Außenform der Umhausung des Elektronikmodules abbildet und der zumindest eine oder weitere Dome oder Stege zumindest bereichsweise als ein Anbindungsbereich des Steckerelements in die Kavität ragen,
c) Vollständiges Ausfüllen der Kavität mit einer Umhüllungsmasse in einem fließfähigen Zustand unter Prozessbedingungen, insbesondere einer Prozesstemperatur für die Umhüllungsmasse in einem fließfähigen Zustand, wobei der Schaltungsträger, die Kontaktelemente auf der Anschlussseite des Steckerelements sowie der Anbindungsbereich des Steckerelements von der Umhüllungsmasse insbesondere vollständig überdeckt werden,
d) Verfestigen der Umhüllungsmasse unter Ausbilden der Umhausung des Elektronikmodules, wobei das Steckerelement im Anbindungsbereich stofflich an die Umhausung angebunden wird und die Umhausung mit einem Spaltabstand zum restlichen Steckerkörper ausgebildet wird.

In einer vorteilhaften Ausführungsform des Verfahrens wird der Steckerkörper während des genannten Verfahrensschritts b) im Bereich des zumindest eines Domes und/oder Steges werkzeugseitig mechanisch vorgespannt, wodurch ein Spannungszustand innerhalb des zumindest eines Domes oder Steges eingeprägt wird. Dabei wird ein werkzeugseitiges Vorspannmaß eingestellt, welches lokal unterschiedliche Schwindmaße des Steckerkörpers und der Umhausung während einer Abkühlung der Umhüllungsmasse im Verfahrensschritt d) von der Prozesstemperatur auf eine Entformungstemperatur berücksichtigt. Auf diese Weise wird nach Wegfall der werkzeugseitig mechanischen Vorspannung, insbesondere nach einer Entformung aus der Kavität, der eingeprägte Spannungszustand durch abschließende unterschiedliche Schwindung des Steckerkörpers und der Umhausung abgebaut. Damit weist das ausgebildete Elektronikmodul im Bereich des zumindest einen oder weiteren von Umhüllungsmasse umgossenen Dome und/oder Stege nur noch einen geringen oder keinen Spannungszustand auf. Damit ist ermöglicht, dass bei Verwendung großer Steckergrößen für eine Direktverpackung eine große Betriebssicherheit erreicht werden kann.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnung. Diese zeigt in:
- Fig. 1a:: ein nach Stand der Technik großflächig umgossenes Steckerelement in einer schematischen Seitendarstellung,
- Fig. 1b:: das Steckerelement aus Fig. 1a mit Darstellung verschiedener schwundbedingten Fehlerstellen,
- Fig. 2:: ein erstes Ausführungsbeispiel eines umgossenen Steckerelements unter Ausbildung eines Elektronikmoduls in einer schematischen Seitendarstellung,
- Fig. 3 - 10:: jeweils weitere Ausführungsbeispiele eines umgossenen Steckerelements unter Ausbildung eines Elektronikmoduls in einer schematischen Seitendarstellung,
- Fig. 11a:: ein weiteres Ausführungsbeispiel eines umgossenen Steckerelements wie in den Fig. 1 bis 10 mit mehrreihigen Kontaktelementen unter Ausbildung eines Elektronikmoduls in einer schematischen Draufsicht,
- Fig. 11b:: ein alternatives Ausführungsbeispiel zur Fig. 11a,
- Fig. 12a - c:: jeweils unterschiedliche Ausführungsbeispiele eines Steckerelements wie in den Fig. 1 bis 11 mit einer Stützstruktur in einer schematischen Darstellung,
- Fig. 13:: beispielhafte Ausführungen von an Domen und/oder Stegen von Steckerelementen ausgebildeten Verkrallungselementen oder Funktionselementen in einer schematischen Nebeneinanderanordnung,
- Fig. 14a:: Einprägen einer Vorspannung in ein Steckerelement nach einem der Fig. 2 bis 12c während einer Ausbildung eines Elektronikmoduls mittels einer werkzeugseitigen Verspannung,
- Fig. 14b: das Elektronikmodul aus Fig. 14a nach einer Entformung aus dem Werkzeug mit abgebauter Vorspannung aufgrund einer abschließenden Schrumpfung.

### Ausführungsformen der Erfindung

In den Figuren sind funktional gleiche Bauelemente jeweils mit gleichen Bezugszeichen gekennzeichnet.

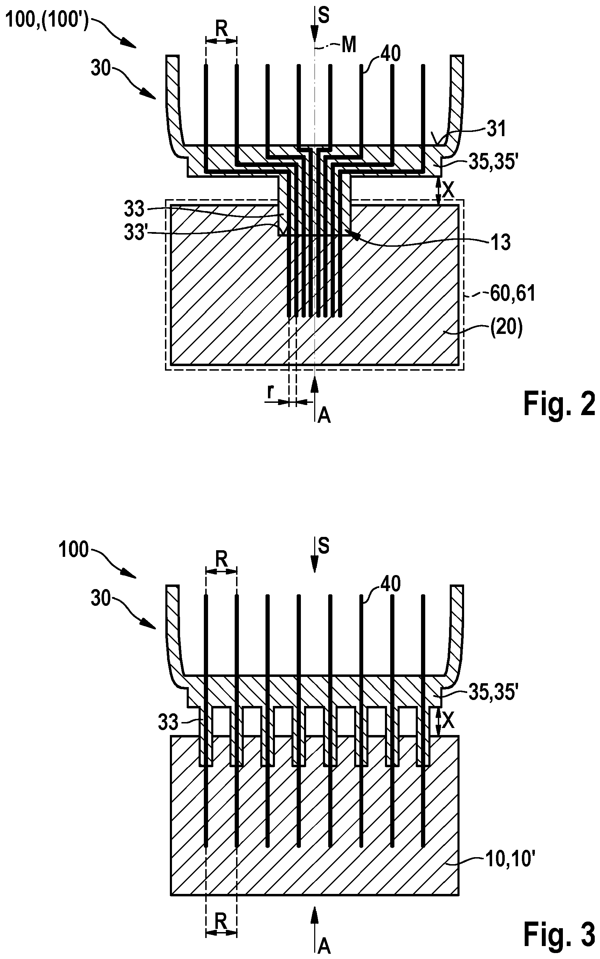

In der Fig. 2 ist ein erstes Ausführungsbeispiel eines umgossenen Steckerelements 30 unter Ausbildung eines Elektronikmoduls 100 in einer schematischen Seitendarstellung gezeigt. Das Steckerelement 30 umfasst vier oder mehr Kontaktelemente 40 und damit eine Steckergröße, bei welcher ansonsten schrumpfbedingte Fehlerstellen F bei einem Mitverguss in einer Umhüllungsmasse 10' entstehen - siehe die Erläuterungen zu den Fig. 1a und 1b. Rein beispielhaft ist das Steckerelement 30 in Fig. 2 als 8-polig gezeigt. Im Unterschied zum bekannten Stand der Technik - wie in der Fig. 1a gezeigt - weist der Steckerkörper 35 auf der Anschlussseite A zumindest einen Dom oder Steg 33 auf, beispielsweise genau einen Dom oder Steg 33. Dieser bildet endseitig eine Abschlussfläche 33' des Steckerelements 30 aus. Die jeweiligen Endseiten aller Kontaktelemente 40 stehen auf der Steckseite S mit einem ersten Rastermaß R frei ab. Im weiteren Verlauf durchdringen die Kontaktelemente 40 die Steckergrundfläche 31 und sind durch den Steckerkörper 35 hindurch auf die Anschlussseite A hin durchgeführt. Dabei sind alle Kontaktelemente 40 innerhalb des einen Domes oder Steges 33 gebündelt zusammengeführt, bevor sie jeweils durch die Abschlussfläche 33' hindurchtreten und von dort mit einem kleineren zweiten Rastermaß r abstehen. Bis zum Dom oder Steg 33 weisen die Kontaktelemente 40 für die Bündelung einen geknickten Verlauf auf. Durch die Bündelung stehen sich die Kontaktelemente 40 innerhalb des Domes oder Steges 33 insgesamt näher zueinander als noch vor Beginn des Knickverlaufes. Dabei ist auf einen minimalen Sicherabstand zueinander zu achten, welcher eine ausreichende Isolationsfestigkeit durch das Material 35' des Steckerkörpers 35 sicherstellt.

Für die Ausbildung eines Elektronikmodules 100 wird in einem Verfahrensschritt a) das Steckerelement 30 als gerade oder gewinkelte Ausführung mit einem bestückten Schaltungsträger 20 elektrisch kontaktiert. Damit wird eine Modulkontaktanordnung 100' ausgebildet. Diese Modulkontaktanordnung 100' wird anschließend in einem Verfahrensschritt b) in eine Kavität 61 eines Werkzeuges 60 eingelegt. Die Kavität 61 bildet dabei eine Außenform des Elektronikmodules 100 ab. Innerhalb der Kavität 61 ist von der Modulkontaktanordnung 100' der bestückte Schaltungsträger 20 sowie die Endseiten der Kontaktelemente 40 auf der Anschlussseite A angeordnet. Ferner ragt der eine Dom oder Steg 33 zumindest bereichsweise als ein Anbindungsbereich 13 in die Kavität 61 hinein. Am Übergang des Domes oder Steges 33 in die Kavität 61 ist ein Dichtbereich (nicht dargestellt) ausgebildet. Daraufhin wird in einem Verfahrensschritt c) eine Umhüllungsmasse 10' im fließfähigen Zustand in die Kavität 61 eingebracht. Dies kann beispielsweise durch ein Transfermolden- oder DIM-Prozess (Direct Injection Molding) erfolgen mit entsprechenden Prozessparametern für die Umhüllungsmasse 10', beispielsweise einem Duroplastmaterial. Die Kavität 61 wird dabei vollständig ausgefüllt, wobei auch der bestückte Schaltungsträger 20, die Kontaktelemente 40 auf der Anschlussseite A sowie der Anbindungsbereich 13 von der Umhüllungsmasse 10' vollständig überdeckt werden. Der Anbindungsbereich 13 reicht maximal bis kurz vor dem Übergang des Domes oder Steges 33 in den restlichen Steckerkörper 35. Idealerweise besteht aber ein Abstand zwischen dem Anbindungsbereich 13 und diesem Übergangsbereich zum Ausschluss einer Anbindung der Umhüllungsmasse 10' an dem restlichen Steckerkörper 35. In einem folgenden Verfahrensschritt d) wird die Umhüllungsmasse 10' verfestigt, beispielsweise durch eine Temperaturabkühlung und/oder durch einen chemischphysikalischen Vernetzungsprozess, wobei die Umhausung 10 des Elektronikmodules 100 ausgebildet wird. Dabei wird das Steckerelement 30 im Anbindungsbereich 13 stofflich an die Umhausung 10 angebunden. Zusätzlich wird die Umhausung 10 ohne eine stoffliche Anbindung an den der restlichen Steckerkörper 35 ausgebildet, indem ein Spaltabstand X mit ausgebildet wird. Alternativ kann im Bereich des Steckerkörpers 35, in welchem keine stoffliche Anbindung erwünscht ist, eine Beschichtung aufgetragen sein, die eine solche stoffliche Anbindung des Materials 35' des Steckerkörpers 35 und der Umhüllungsmasse 10' erschwert bzw. verhindert. Das Material 35' des Steckerkörpers 35, insbesondere ein Thermoplastmaterial, weist einen deutlich größeren Ausdehnungskoeffizienten auf, als die Umhüllungsmasse 10'. Im Anbindungsbereich 13 weist das Elektronikmodul 100 im Vergleich zum bekannten Stand der Technik wie in der Fig. 1a oder 1b eine deutlich kleinere Grenzfläche zwischen beiden stofflich angebundenen Materialien 10', 35' auf. Allein dadurch fallen die ansonsten schrumpfbedingten Spannungszustände deutlich kleiner aus, trotz kritischer Steckergröße. Dies resultiert dadurch, dass der Dom bzw. der Steg 33 eine geringere Abschlussfläche 33' aufweist als die Steckergrundfläche 31 des Steckerelements 30. Zusätzlich können sich die Bereiche außerhalb des stofflich angebundenen Domes oder Steges 33 am Steckerkörper 35 bzw. an der Umhausung 10 bei einer Schrumpfung ungehindert bewegen und tragen damit keinen Beitrag für einen schrumpfbedingten nachteiligen Spannungszustand bei. Der Dom oder Steg 33 ist bevorzugt gegenüberliegend zu einem Mittenbereich der Steckergrundfläche 31 angeordnet.

In der Fig. 3 ist ein weiteres Ausführungsbeispiel eines umgossenen Steckerelements 30 unter Ausbildung eines Elektronikmoduls 100 in einer schematischen Seitendarstellung gezeigt. Im Unterschied zur Ausführung wie in Fig. 2 gezeigt, weist das Steckerelement 30 in Fig. 3 mehrere Dome oder Stege 33 auf. Zusätzlich erstrecken sich alle Kontaktelemente 40 einzeln jeweils durch genau einen Dom oder Steg 33. Die Kontaktelement 40 weisen in diesem Fall keinen Knickverlauf auf, können daher geradlinig ausgeführt sein. Die Grenzfläche zwischen den stofflich angebundenen beiden Materialien 10', 35' ist weiterhin deutlich kleiner als im bekannten Stand der Technik. Durch den Spaltabstand X wirken die nicht umgossenen Anteile der Dome oder Stege 33 wie nachgiebige Federelemente. Diese können den unterschiedlichen Schwundmaßen der Materialien 10', 35' nachgeben, so dass deutlich geringere schrumpfbedingte Spannungszustände entstehen.

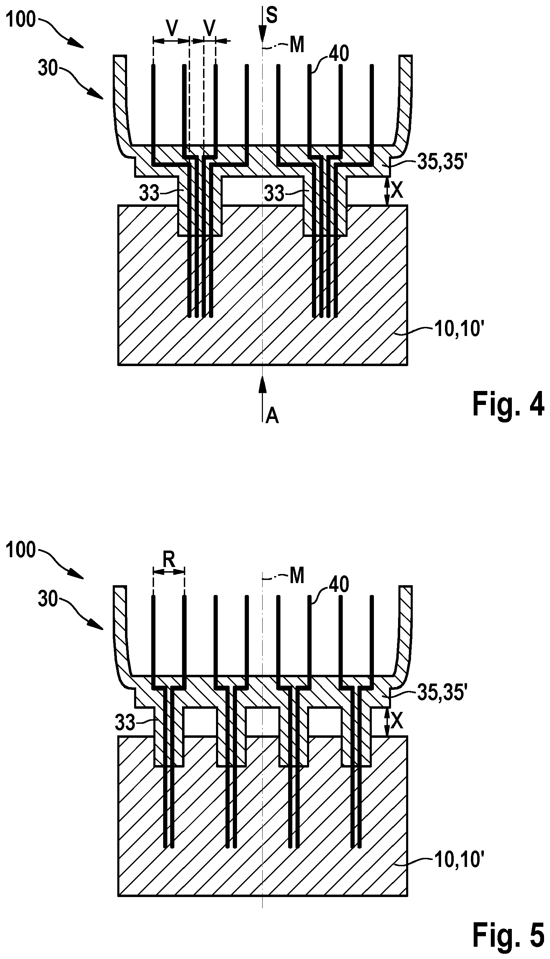

In der Fig. 4 ist ein weiteres Ausführungsbeispiel eines umgossenen Steckerelements 30 unter Ausbildung eines Elektronikmoduls 100 in einer schematischen Seitendarstellung gezeigt. Es weist wie die Ausführung in Fig. 3 mehrere Dome oder Stege 33 auf, mindestens jedoch zwei. Es sind nun je Dom oder Steg 33 wie in der Fig. 2 jeweils mehrere Kontaktelemente 40 gebündelt durchgeführt.

Die Bündelung der Kontaktelemente 40 je Dom oder Steg 33 kann sich entgegen der bildlichen Darstellung auch in der jeweiligen Anzahl unterscheiden. Dabei weisen ein oder weitere Kontaktelemente 40 innerhalb jeweils eines Domes oder Steges 33 umfassend zwei oder mehr Kontaktelemente 40, einen lateralen Versatz V auf zwischen ihren die Steckergrundfläche 31 und die jeweilige Abschlussfläche 33' durchdringenden Enden - ähnlich wie bereits in der Fig. 2 gezeigt. Bevorzugt sind die Kontaktelemente 40 je Dom oder Steg 33 in einer spiegelbildlichen Anordnung zueinander angeordnet.

In der Fig. 5 ist ein weiteres Ausführungsbeispiel eines umgossenen Steckerelements 30 unter Ausbildung eines Elektronikmoduls 100 in einer schematischen Seitendarstellung gezeigt. Es unterscheidet sich gegenüber der Ausführung in Fig. 4 darin, dass je Dom oder Steg 33 jeweils genau zwei Kontaktelemente 40 gebündelt durchgeführt sind. Damit können gleich ausgeführte Kontaktelemente 40 verwendet werden.

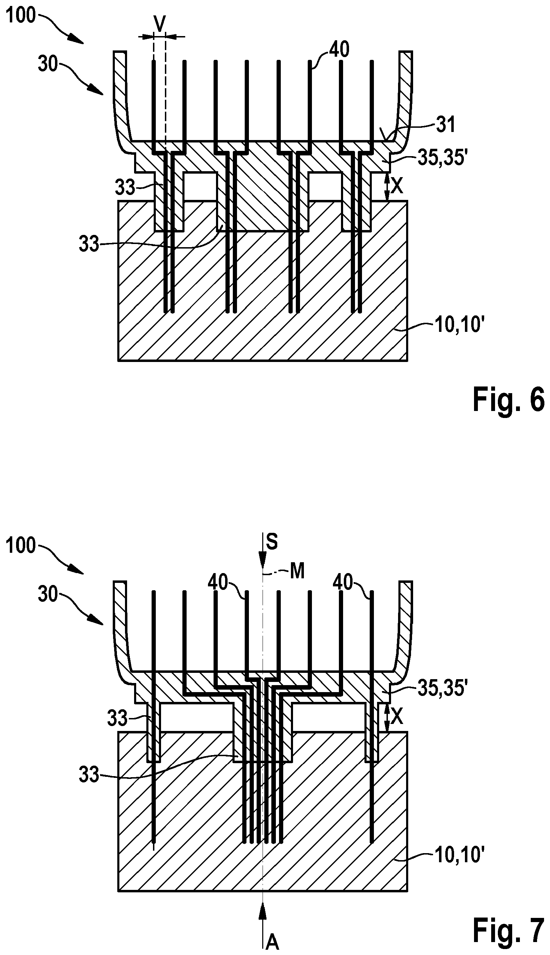

In der Fig. 6 ist ein weiteres Ausführungsbeispiel eines umgossenen Steckerelements 30 unter Ausbildung eines Elektronikmoduls 100 in einer schematischen Seitendarstellung gezeigt. Im Unterschied zur Ausführung gemäß der Fig. 5 sind die zwei innen angeordneten Dome oder Stege 33 hier nun zu einem im Querschnitt größeren Dom oder Steg 33 zusammengefasst unter Beibehaltung der Kontaktelemente 40 als Gleichteile. Damit erhöht sich nur unwesentlich die Grenzfläche im Anbindungsbereich 13 der beiden stofflich angebundenen Materialien 10', 35'. Wegen der mittigen Anordnung des größeren Domes oder Steges 33 zum Steckerkörper 35 ist dies unkritisch, da dort - wie auch in der Ausführung gemäß der Fig. 2 - nur geringe Schrumpfmaße wirksam werden.

Die weitere mögliche Ausführung gemäß der Fig. 7 ähnelt sehr der zuvor beschriebenen Ausführung. Die Unterscheidung zeigt sich lediglich darin, dass im mittigen Dom oder Steg 33 mit dem größeren Querschnitt nun mehr Kontaktelemente 40 gebündelt zusammengeführt sind, ähnlich wie in den bereits davor beschriebenen Ausführungen. Für die Bündelung weisen diese Kontaktelemente 40 innerhalb des Steckerkörpers 35 wiederrum einen Knickverlauf auf. Innerhalb den äußeren angeordneten beiden Domen oder Stegen 33 mit jeweils kleinerem Querschnitt erstreckt sich dagegen jeweils nur ein Kontaktelement 40. Sowohl die Ausführung gemäß der Fig. 6 als auch die Ausführung gemäß der Fig. 7 weisen die Besonderheit auf, dass die weiter außen angeordneten Dome oder Stege 33 - insbesondere bezogen auf eine Mittenachse M des Steckerkörpers - eine höhere Elastizität aufweisen, als die weiter innen liegenden Dome oder Stege 33. Diese Besonderheit lässt sich auch anwenden auf Ausführungen mit mehr als nur drei Domen oder Stegen 33. Die höhere Elastizität ist bewirkt durch die kleineren Querschnitte der Dome oder Stege 33, wodurch die gerade weiter außen vorliegenden Schrumpfmaße entsprechend besser aufgenommen werden können. Die Elastizität lässt sich weiter erhöhen, indem - wie in Fig. 7 - die Anzahl der gebündelten Kontaktelemente 40 je Dom oder Steg 33 nach außen hin abnimmt, bis minimal auf ein Kontaktelement 40. Eine weitere Steigerung der Elastizität lässt sich noch erreichen, indem nicht nur die Querschnitte der Dome oder Stege 33, sondern auch die der Kontaktelemente 40 entsprechend abnehmen.

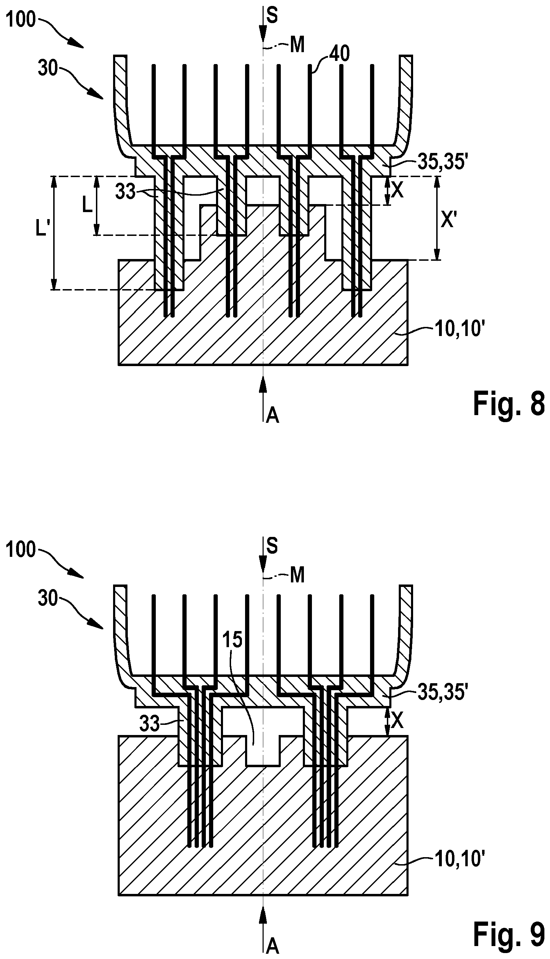

Eine weitere Möglichkeit zur Erhöhung der Elastizität ist in der Fig. 8 gezeigt, indem die Dome oder Stege 33 ein größeres Längenmaß L, L' aufweisen, je weiter sie außen angeordnet sind bezogen auf eine Mittenachse M des Steckerkörpers 35. Grundsätzlich erhöht sich damit auch in gleicher Weise der entsprechende Spaltabstand X, X' zwischen der Umhausung 10 und dem restlichen Steckerkörper 35.

In der Fig. 9 ist ein weiteres Ausführungsbeispiel eines umgossenen Steckerelements 30 unter Ausbildung eines Elektronikmoduls 100 in einer schematischen Seitendarstellung gezeigt. Dargestellt ist dabei vorrangig eine Möglichkeit, eine Elastizität auch auf Seiten der Umhausung 10 für einen Spannungsabbau bei Schrumpfvorgängen positiv zu beeinflussen. Hierzu ist im Bereich zumindest eines zumindest bereichsweise in der Umhüllungsmasse 10' eingebetteten Domes oder Steges 33 die Umhausung 10 zumindest lokal begrenzt vertiefend abgesetzt. Insbesondere zwischen zwei nächstbenachbarten Domen oder Stegen 33 kann dies in Form einer Aussparung 15 erfolgen.

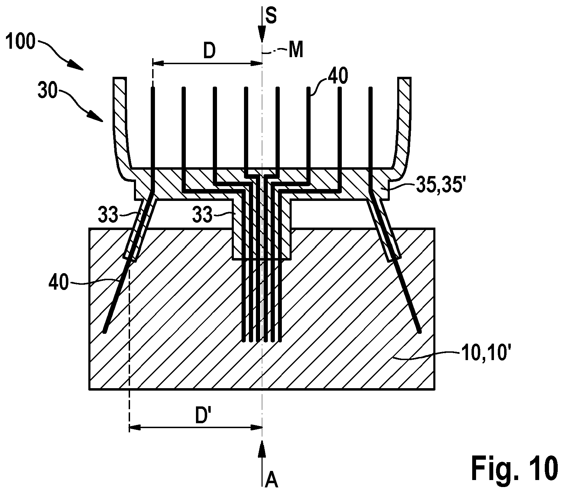

Die Fig. 10 zeigt eine Ausführungsmöglichkeit zur Erhöhung einer mechanischen Stabilität des Steckerelements 30, ohne sich besonders negativ auf einen schrumpfbedingten Spannungszustand auszuwirken. Hierbei sind die insbesondere außen angeordneten Dome und Stege 33 schräg abstehend ausgeführt, so dass ein lateraler Abstand D' in Bereich der Abschlussflächen 33' größer ist als ein lateraler Abstand D im Übergangsbereich in den Steckerkörper 35. Hierbei verbessert sich auch ein relativer Schrumpfunterschied zwischen dem Steckerkörper 35 und der Umhausung im äußeren Bereich.

Ganz allgemein kann für alle Ausführungen mit mehr als drei Domen oder Stegen 33, welche in einem Rasterabstand R zur Mittelachse M entfernt angeordnet sind, die jeweils weiter außen angeordneten Dome oder Stege 33 mit einem zunehmend kleinerem Rastermaß R angeordnet sein. Dies berücksichtigt die größeren absoluten Schrumpfbewegungen an diesen Stellen, so dass ein möglicher schrumpfbedingter Spannungszustand limitiert wird.

Nach einer Bündelung von Kontaktelementen 40 kann ein im Vergleich zur Steckseite S verkleinertes Rastermaß auf der Anschlussseite A verbleiben. Ebenso können die Kontaktelemente 40 nach einer Bündelung bei einzelnen oder allen Domen oder Stegen 33 wieder aufgefächert werden. Die Auffächerung ist dann bevorzugt derart, dass auf der Anschlussseite A das gleiche Rastermaß R zwischen den Kontaktelementen 40 vorliegt wie auf der Steckseite S. Es ist aber auch denkbar, das Rastermaß r auf der Anschlussseite A anwendungsspezifisch anzupassen und dieses größer oder kleiner als das Rastermaß R auf der Steckseite S auszuführen.

Die Ausführungen des Steckerelements 30 bzw. des Elektronikmodules 100 sind nicht auf die beschriebenen Ausführungsbeispiele beschränkt. Vielmehr lassen sich Ausführungsaspekte in Kombination von mindestens zwei oder mehr beschriebenen Ausführungen zu weiteren angepassten, erweiterten oder abgeänderten Ausführungen umsetzen. Insbesondere lassen sich die Anzahl von Domen oder Stegen 33 bzw. Kontaktelementen 40 und die bereits zu diesen erwähnten Größenparametern anders wählen, als hier beispielhaft gezeigt.

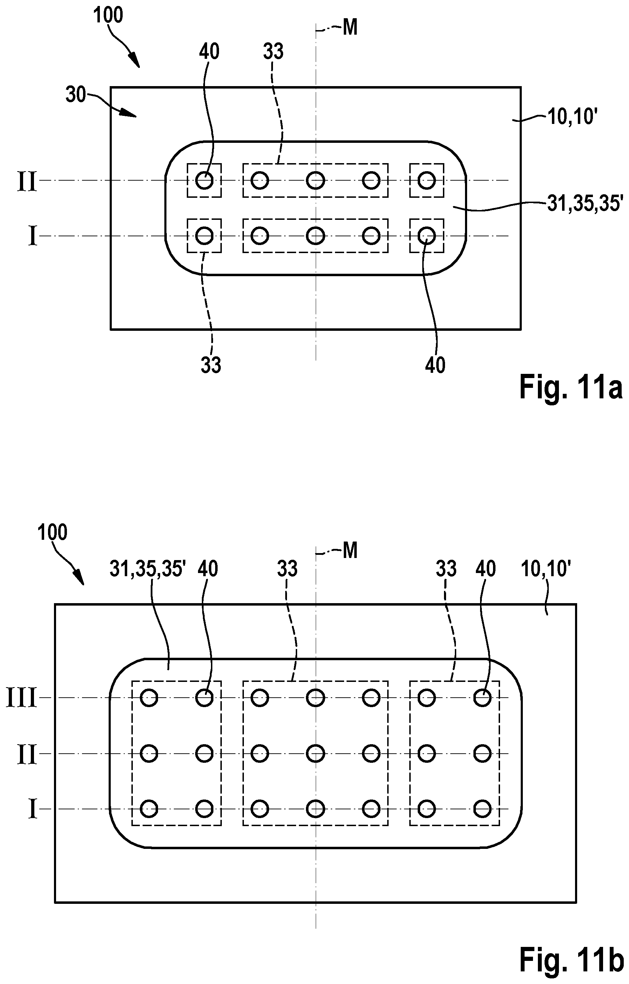

Gleiches lässt sich auch anwenden auf mögliche Elektronikmodule 100 bzw. Steckerelemente 30 mit zwei oder mehr insbesondere parallele Reihen von Kontaktelementen 40. Die Fig. 11a und 11b zeigen beispielsweise Ausführungen von Steckerelementen 30 mit mehreren Reihen I, II, III, beispielsweise zwei oder drei Reihen I, II, III, von zwei oder mehr Kontaktelementen 40 in einer jeweiligen Linienanordnung. Gezeigt sind die Kontaktelemente 40 in einer Draufsicht auf die Steckergrundfläche 31. Nachfolgendes gilt gleichwertig auch für Kontaktelemente 40 in einer mehrreihigen Kreisanordnung. In der Fig. 11a sind innerhalb eines Domes oder Steges 33 ausschließlich benachbarte Kontaktelemente 40 aus der gleichen Reihe I, II gebündelt zusammengeführt. Dagegen sind in der Ausführung gemäß der Fig. 11b ausschließlich benachbarte Kontaktelemente 40 aus verschiedenen Reihen I, II, III gebündelt zusammengefasst. Die Bündelung kann hier anwendungsspezifisch verschiedenartig erfolgen in Anlehnung auf fertigungsrelevante Entformungsanforderungen. In diesem Fall sind auch Ausführungen denkbar, bei welchen sich zumindest zwei benachbarte Kontaktelemente 40 aus der gleichen und zumindest einer weiteren Reihe I, II, III innerhalb eines Domes oder Steges 33 erstrecken.

Grundsätzlich lassen sich bevorzugt Steckerelemente 30 innerhalb eines Elektronikmodules 100 einsetzen, bei denen zwei oder mehr Dome und/oder Stege 33 spiegel- und/oder punktsymmetrisch zur Mittenachse M und/oder zu einer Mittenebene des Steckerkörpers 35 ausgebildet sind.

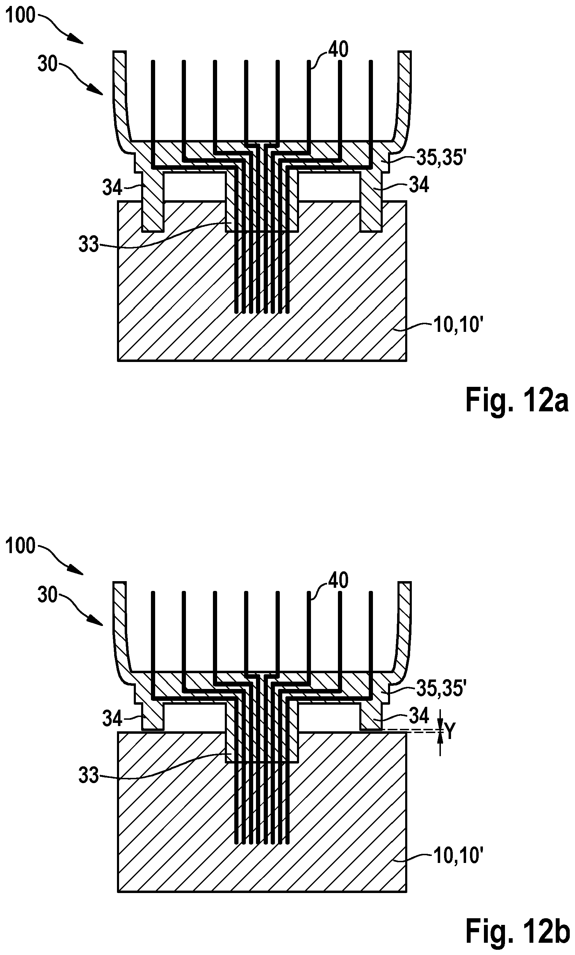

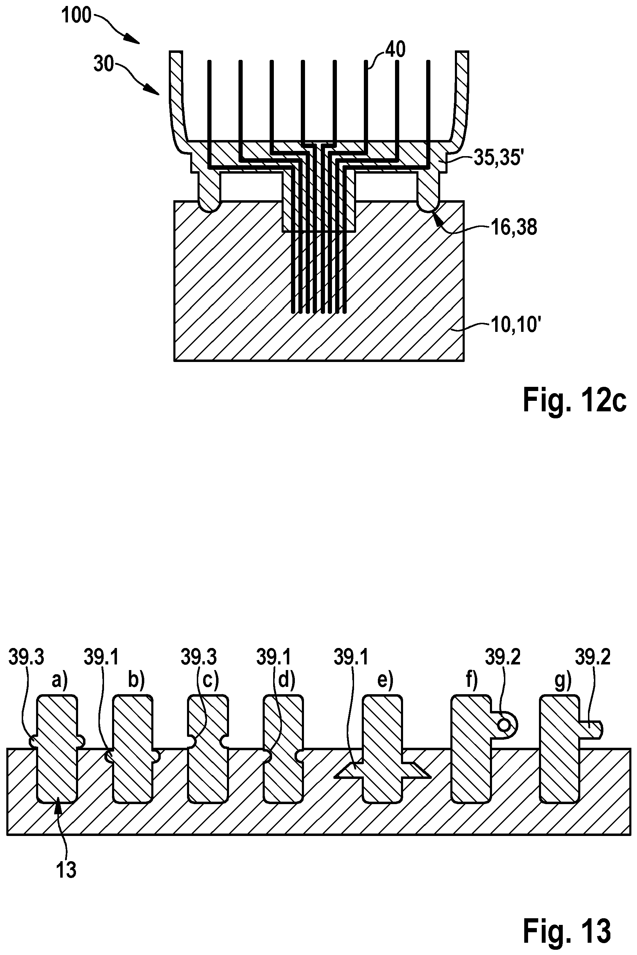

Ferner lassen sich alle Ausführungen auch allgemein mit einer Stützstruktur 34 des Steckerkörpers 35 an die Umhausung 10 vorsehen, wodurch eine größere mechanische Stabilität des Elektronikmodules 100 sichergestellt werden kann, insbesondere in Hinblick auf Steckkräfte beim Einstecken oder Herausziehen eines Gegensteckers 30' in bzw. aus dem Steckerelement 30. Hierfür ist zumindest ein oder sind mehrere Dome oder Stege 34 am Steckerkörper 35 ausgebildet, welche/welcher frei ist/sind von einem Kontaktelement 40. Bevorzugt ist die Stützstruktur 34 an den äußersten Bereichen des Steckerkörpers 35 ausgebildet. Die Fig. 12a zeigt eine Ausführungsmöglichkeit, bei welcher die Stutzstruktur 34 durch in die Umhüllungsmasse 10' mit eingegossene Dome oder Stege ausgebildet sind - ähnlich, wie das bereits für die die Kontaktelemente 40 enthaltenen Dome oder Stege 33 beschrieben ist. Die Fig. 12b zeigt eine weitere Ausführungsmöglichkeit, bei welcher die die Stützstruktur 34 ausbildenden Dome oder Stege keine stoffliche Anbindung an die Umhausung 10 aufweisen. Vielmehr ist zwischen der Stützstruktur 34 und der Umhausung 10 ein bevorzugt minimaler Spalt Y gebildet. Wirken äußere Kräfte auf das Steckerelement 30 ein, gelangt die Stützstruktur 34 unmittelbar in physischen Anlagenkontakt mit der Umhausung 10. Dadurch ist eine Abstützwirkung realisierbar, ohne dass die Stützstruktur 34 einen negativen Einfluss auf einen schrumpfbedingten Spannungszustand nimmt. In der Fig. 12c zeigt sich ein ähnlicher Vorteil. Hierbei weist die Stützstruktur 34 auf ihrer der Umhausung 10 zugewandten Seite eine Beschichtung 38 auf, welche eine stoffliche Anbindung der Stützstruktur 34 an die Umhüllungsmasse 10' der Umhausung 10 verhindert. Bevorzugt ragt die Stützstruktur 34 zumindest bereichsweise in die Umhausung 10 hinein, wobei endseitig zur Stützstruktur 34 eine Art Mulde 16 ausgebildet ist, welche eine Relativbewegung zwischen der Stützstruktur 34 und der Umhausung 100 ermöglicht. Ähnlich wie bei der Ausführung gemäß der Fig. 12b ist eine Stützwirkung realisierbar, wobei die Mulde 16 dann zusätzlich eine lokale lose Verankerung der Stützstruktur 34 erwirkt.

Zur Verbesserung einer stofflichen Anbindung der Dome oder Stege 33, 34 mit der Umhüllungsmasse 10' kann innerhalb des Anbindungsbereiches 13 zumindest ein Verkrallungselement 39.1 ausgebildet sein. Dies kann beispielsweise in Form eine Erhebung oder Vertiefung erfolgen, wie beispielsweise unter b), d) und e) gezeigt. Alternativ oder zusätzlich kann auch ein Funktionselement außerhalb des Anbindungsbereiches 13 ausgebildet sein, beispielsweise in Form eines Befestigungselementes 39.2 - wie unter f) und g) gezeigt - oder in Form eines Dichtelementes 39.3 gegen ein Werkzeug 60, 61 beim Vergussprozess mit der Umhüllungsmasse 10'. Dies zeigt beispielsweise a) oder c).

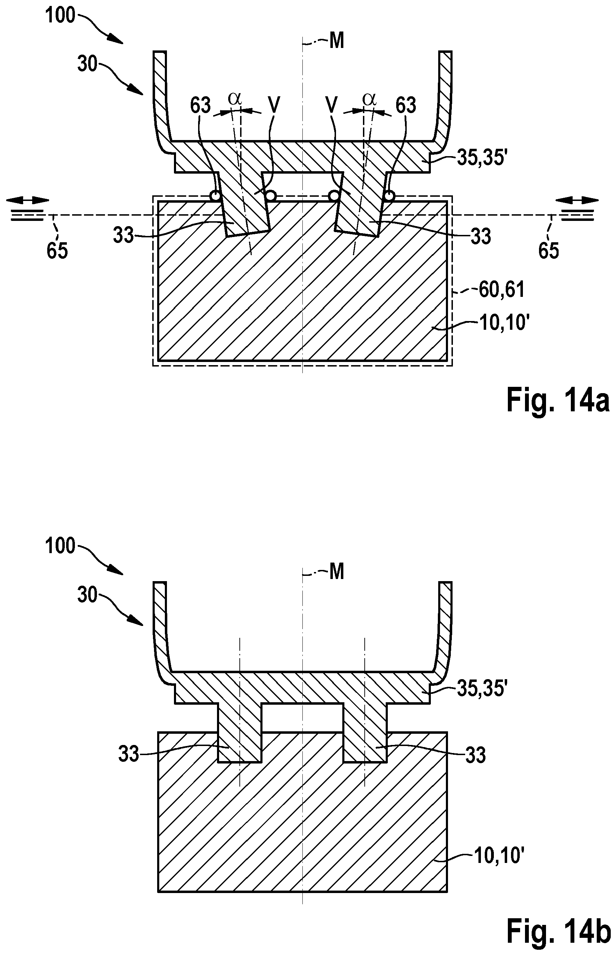

Die Fig. 14a zeigt einen Fertigungszeitpunkt bei einem Verfahren zur Ausbildung des Elektronikmodules 100 während des Verfahrensschrittes b). Zur Vereinfachung sind die Kontaktelemente 40 nicht mehr dargestellt. Dabei wird in das Steckerelement 30 im Bereich der Dome oder Stege 33 mittels einer werkzeugseitigen Verspannung eine Vorspannung V eingeprägt. Die Vorspannung V ist dabei genau entgegengesetzt eingeprägt, als dies nach einem Schrumpfen der Fall ist. Bevorzugt erfolgt das Verspannen mit oder nach dem Erreichen einer Prozesstemperatur für die Umhüllungsmasse 10'. Mit der werkzeugseitigen Verspannung werden die Dome oder Stege 33 in Schrumpfrichtung verformt. Die Dome oder Stege 33 werden dann im Verfahrensschritt c) mit diesen Verformungen von der Umhüllungsmasse 10' überdeckt. Vor einer vollständigen Verfestigung der Umhüllungsmasse 10' im Verfahrensschritt d) wird die werkzeugseitige Verspannung zurückgenommen. Die Fig. 14b zeigt das Elektronikmodul 100 nach der Entformung aus dem Werkzeug 60. Dabei ist die eingeprägte Vorspannung V wieder abgebaut und die Dome oder Stege 33 weisen idealerweise wieder eine verformungsfreie Orientierung auf. Dies erfolgt aufgrund von abschließenden Schrumpfprozessen, bei denen die unterschiedlichen Schrumpfbewegungen des Steckerkörpers 35 und der ausgebildeten Umhausung 10 die zuvor vorhandene Verformung der Dome und Stege 33 wieder rückgängig ausgleichen. Bevorzugt wird daher ein werkzeugseitige Vorspannmaß eingestellt, bei welchem die eingeprägte Vorspannung V nach abschließender unterschiedlicher Schwindung des Steckerkörpers 35 und der Umhausung 10 vollständig oder nahezu vollständig abgebaut wird. Die werkzeugseitige Verspannung kann auf unterschiedliche Weise realisiert werden. So kann das Werkzeug 60 einen Einlagebereich 63 aufweisen, welcher mit dem Einlegen des Steckerelements 30 durch leichten Versatz zu den Lagen der Dome oder Stege 33 das Vorspannmaß erwirken. Dieses Vorspannmaß löst sich dann mit dem Entformen des Elektronikmodules 100 aus dem Werkzeug 60 wieder auf. Alternativ können auch zurückschiebbare Fixierelemente 65, sogenannte "retractable pins" (gestrichelt dargestellt), zum Einsatz kommen. Diese können weiter endseitig an den Domen oder Stegen 33 angreifen und damit bei Bedarf eine größere Vorspannung V einprägen. Die Fixierelemente 65 lassen sich dann noch vor einer Verfestigung der Umhüllungsmasse 10' innerhalb des Werkzeuges 60 zurückschieben, wobei der ursprünglich eingenommene Platz innerhalb der Kavität 61 dann durch nachdrückende Umhüllungsmasse 10' geschlossen wird.

## Patentansprüche

1. Steckerelement (30) mit einer Steckseite (S), die der direkten elektrischen Kontaktierung mit einem Gegenstecker (30') dient, und mit einer Anschlussseite (A), die der direkten elektrischen Kontaktierung eines Schaltungsträgers (20) dient, umfassend zumindest vier oder mehr Kontaktelement (40) für die jeweilige elektrische Kontaktierung, wobei die zumindest vier oder mehr Kontaktelemente (40) zwischen der Steckseite (S) und der Anschlussseite (A) von einem elektrisch isolierenden Steckerkörper (35) dichtend umschlossen sind und jeweils endseitig vom Steckerkörper (35) frei abstehen, wobei die Kontaktelemente (40) auf der Steckseite (S) eine vom Steckerkörper (35) gebildete Steckergrundfläche (31) durchdringen, **dadurch gekennzeichnet, dass** der Steckerkörper (35) auf der Anschlussseite (A) zumindest einen oder weitere abstehende Dome und/oder Stege (33) aufweist, welcher/welche endseitig jeweils eine Abschlussfläche (33') des Steckerkörpers (35) bildet/bilden, wobei alle Kontaktelemente (40) sich über einen jeweiligen Längsabschnitt innerhalb des einen oder weiteren Dome und/oder Stege (33) erstrecken und dabei jeweils zumindest die eine oder weitere Abschlussflächen (33') durchdringen, und wobei der zumindest eine oder weitere Dome und/oder Stege ausgebildet ist/sind, einen Anbindungsbereich (13) des Steckerelements (30) für eine Umhüllungsmasse (10') bereitzustellen, um den Steckerkörper (35) in einem kontaktierten Zustand des Steckerelements (30) mit dem Schaltungsträger (20) stoffschlüssig an eine Umhausung (10) des Schaltungsträgers (20) aus der Umhüllungsmasse (10') anzubinden.

2. Steckerelement (30) nach Anspruch 1,
**dadurch gekennzeichnet, dass**
eine Summe aller Abschlussflächen (33') des einen oder weiteren Dome oder Stege (33) geringer ist als die Steckergrundfläche (31) und insbesondere innerhalb einer senkrechten Projektionsfläche der Steckergrundfläche (31) angeordnet sind.

3. Steckerelement (30) nach einem der Ansprüche 1 oder 2,
**dadurch gekennzeichnet, dass**
der Steckerkörper (35) eine Mittenachse (M) und/oder eine Mittenebene aufweist und zwei oder mehr Dome und/oder Stege (33) spiegel- und/oder punktsymmetrisch zur Mittenachse (M) und/oder zur Mittenebene ausgebildet sind.

4. Steckerelement (30) nach einem der vorhergehenden Ansprüche,
**dadurch gekennzeichnet, dass**
zumindest ein Dom oder Steg (33) ausgebildet ist, welcher frei von Kontaktelementen (40) ist und ausgebildet ist, eine Stützstruktur (34) zur Umhausung (10) des Schaltungsträgers (20) aus der Umhüllungsmasse zu (10') zu bilden.

5. Steckerelement (30) nach einem der vorhergehenden Ansprüche,
**dadurch gekennzeichnet, dass**
alle Kontaktelemente (40) zusammen sich durch genau einen Dom oder Steg (33) erstrecken und der Dom oder Steg (33) insbesondere gegenüberliegend zu einem Mittenbereich der Steckergrundfläche (31) angeordnet ist oder alle Kontaktelemente (40) sich einzeln jeweils durch genau einen Dom oder Steg (33) erstrecken, insbesondere geradlinig.

6. Steckerelement (30) nach einem der Ansprüche 1 bis 4,
**dadurch gekennzeichnet, dass**
zwei oder mehr Dome und/oder Stege (33) ausgebildet sind, wobei sich durch alle Dome und/oder Stege (33) mindestens zwei oder mehr Kontaktelemente (30) oder zumindest in einer Teilgruppe umfassend zumindest einen Dom oder Steg (33) sich mindestens zwei oder mehr Kontaktelemente (40) durch jeweils einen Dom oder Steg (33) erstrecken.

7. Steckerelement (30) nach einem der Ansprüche 3 bis 6,
**dadurch gekennzeichnet, dass**
bei drei oder mehr Domen oder Stegen (33) die jeweils weiter außen angeordneten Dome oder Stege (33) bezogen auf die Mittelachse (M) des Steckerkörpers (35) eine höhere Elastizität aufweisen, als die jeweils weiter innen angeordneten Dome oder Stege (33), wobei die höhere Elastizität bevorzugt durch einen geringeren Querschnitt der jeweiligen Dome oder Stege (33) und/oder durch ein größeres Längenmaß der jeweiligen Dome oder Stege (33) und/oder durch eine geringere Anzahl an enthaltenen Kontaktelementen (40) innerhalb der jeweiligen Dome oder Stege (33) und/oder durch einen geringeren Querschnitt der innerhalb der jeweiligen Dome oder Stege (33) angeordneten Kontaktelemente (40) bewirkt ist.

8. Steckerelement (30) nach einem der Ansprüche 3 bis 7,
**dadurch gekennzeichnet, dass**
drei oder mehr Domen oder Stegen (33) in einem Rasterabstand zur Mittelachse (M) entfernt angeordnet sind, wobei die jeweils weiter außen angeordneten Dome oder Stege (33) mit einem zunehmend kleinerem Rastermaß angeordnet sind.

9. Steckerelement (30) nach einem der vorhergehenden Ansprüche,
**dadurch gekennzeichnet, dass**
das Steckerelement (30) zwei oder mehr insbesondere parallele Reihen (I, II, III) von Kontaktelementen (40) aufweist, wobei eine Reihe (I, II, III) von zwei oder mehr Kontaktelementen (40) in einer Linienanordnung oder in einer Kreisanordnung gebildet ist, und wobei innerhalb eines Domes oder Steges (33) sich ausschließlich benachbarte Kontaktelemente (40) aus der gleichen Reihe (I, II, III) erstrecken oder sich ausschließlich benachbarte Kontaktelemente (40) aus verschiedenen Reihen (I, II, III) erstrecken oder sich zumindest zwei benachbarte Kontaktelemente (40) aus der gleichen und zumindest einer weiteren Reihe (I, II, III) erstrecken.

10. Steckerelement (30) nach einem der vorhergehenden Ansprüche,
**dadurch gekennzeichnet, dass**
an zumindest einem oder allen Domen und/oder Stegen (33) innerhalb des Anbindungbereiches (13) zumindest ein Verkrallungselement (39.1) für die Umhüllungsmasse ausgebildet ist, insbesondere als eine lokale Erhebung oder Vertiefung, und/oder insbesondere ein Befestigungselement (39.2) oder ein Abdichtungselement (39.3) für ein Werkzeug (60) beim Anbinden des Steckerkörpers (35) an die Umhüllungsmasse (10').

11. Elektronikmodul (100), umfassend einen bestückten Schaltungsträger (20) und ein Steckerelement (30) nach einem der vorhergehenden Ansprüche, wobei das Steckerelement (30) mit seiner Anschlussseite (A) elektrisch mit dem Schaltungsträger (20) kontaktiert ist und der Schaltungsträger (20) sowie die Kontaktelemente (40) auf der Anschlussseite (A) des Steckerelements (30) von einer Umhüllungsmasse (10') insbesondere vollständig überdeckt sind unter Ausbildung einer Umhausung (10) des Elektronikmodules (100), wobei der zumindest eine oder weitere Dome oder Stege (33) des Steckerkörpers (35) als ein Anbindungsbereich (13) des Steckerelements (30) zumindest bereichsweise in der Umhüllungsmasse (10') eingebettet ist/sind, wodurch der Steckerkörper (35) über den Anbindungsbereich (13) stofflich an die Umhausung (10) angebunden ist.

12. Elektronikmodul (100) nach Anspruch 11,
**dadurch gekennzeichnet, dass**
die Umhüllungsmasse (10') nur über eine Teilhöhe des zumindest einen oder weiteren Dome oder Stege (33) reicht, wobei zwischen der Umhausung (10) und dem restlichen Steckerkörper (35) ein Spaltabstand (X, X') besteht, wobei insbesondere die Umhausung (10) mit zunehmender lateraler Entfernung zu einer Mittenachse (M) und/oder einer Mittenebene des Steckerelements (30) einen zunehmend größeren Spaltabstand (X, X') zum restlichen Steckerkörper (35) aufweist.

13. Elektronikmodul (100) nach einem der Ansprüche 11 oder 12,
**dadurch gekennzeichnet, dass**
die Umhausung (10) im Bereich zumindest eines zumindest bereichsweise in der Umhüllungsmasse (10') eingebetteten Domes oder Steges (33) zumindest lokal begrenzt vertiefend abgesetzt ist, insbesondere zwischen zwei nächstbenachbarten Domen oder Stegen (33).

14. Verfahren zum Ausbilden eines Elektronikmoduls (100) nach einem der Ansprüche 11 bis 13, mit den nachfolgenden Verfahrensschritten:
a) Elektrisches Kontaktieren der Anschlussseite (A) des Steckerelements (30) mit einem bestückten Schaltungsträger (20) unter Ausbilden einer Modulkontaktanordnung (100'),
b) Einlegen der Modulkontaktanordnung (100') innerhalb einer Kavität (61) eines Werkzeuges (60), wobei die Kavität (61) eine Außenform der Umhausung (10) des Elektronikmodules (100) abbildet und der zumindest eine oder weitere Dome oder Stege (33) zumindest bereichsweise als ein Anbindungsbereich (13) des Steckerelements (30) in die Kavität (61) ragen,
c) Vollständiges Ausfüllen der Kavität (61) mit einer Umhüllungsmasse (10') in einem fließfähigen Zustand unter Prozessbedingungen, insbesondere einer Prozesstemperatur für die Umhüllungsmasse (10') im fließfähigen Zustand, wobei der Schaltungsträger (20), die Kontaktelemente (40) auf der Anschlussseite (A) des Steckerelements (30) sowie der Anbindungsbereich (13) des Steckerelements (30) von der Umhüllungsmasse (10') überdeckt werden,
d) Verfestigen der Umhüllungsmasse (10') unter Ausbilden der Umhausung (10) des Elektronikmodules (100), wobei das Steckerelement (30) im Anbindungsbereich (13) stofflich an die Umhausung (10) angebunden wird und die Umhausung (10) mit einem Spaltabstand (X, X') zum restlichen Steckerkörper ausgebildet wird.

15. Verfahren nach Anspruch 14,
**dadurch gekennzeichnet, dass**
die Umhausung (10) während des Verfahrensschritts b) im Bereich des zumindest eines Domes oder Steges (33) werkzeugseitig mechanisch vorgespannt wird, wodurch ein Spannungszustand innerhalb des zumindest eines Domes oder Steges (33) eingeprägt wird, wobei ein werkzeugseitiges Vorspannmaß eingestellt wird, welches lokal unterschiedliche Schwindmaße des Steckerkörpers (30) und der Umhausung (10) während einer Abkühlung der Umhüllungsmasse (10') im Verfahrensschritt d) von der Prozesstemperatur auf eine Entformungstemperatur berücksichtigt, so dass nach Wegfall der werkzeugseitig mechanischen Vorspannung (V), insbesondere nach einer Entformung aus der Kavität (61), der eingeprägte Spannungszustand durch abschließende unterschiedliche Schwindung des Steckerkörpers (35) und der Umhausung (10) abgebaut wird.

## Claims

1. Plug element (30) having a plug-in side (S), which serves for direct electrical contact-connection with a mating plug (30'), and having a connection side (A), which serves for direct electrical contact-connection of a circuit carrier (20), comprising at least four or more contact elements (40) for the respective electrical contact-connection, wherein the at least four or more contact elements (40) are sealingly enclosed by an electrically insulating plug body (35) between the plug-in side (S) and the connection side (A) and each project freely from the plug body (35) at the end side, wherein the contact elements (40), on the plug-in side (S), pass through a plug base surface (31) formed by the plug body (35),
**characterized in that**
the plug body (35), on the connection side (A), has at least one or further projecting domes and/or ridges (33), which each forms/form a terminating surface (33') of the plug body (35) at the end side, wherein all contact elements (40) extend over a respective longitudinal portion within the one or further domes and/or ridges (33) and each pass through at least the one or further terminating surfaces (33'), and wherein the at least one or further domes and/or ridges is/are designed to provide a connecting region (13) of the plug element (30) for an encapsulation compound (10') in order to connect the plug body (35), in a contact-connected state of the plug element (30) with the circuit carrier (20), in an integrally joined manner to an enclosure (10) of the circuit carrier (20) composed of the encapsulation compound (10').

2. Plug element (30) according to Claim 1,
**characterized in that**
a sum of all of the terminating surfaces (33') of the one or further domes or ridges (33) is less than the plug base surface (31) and in particular are arranged within a vertical projection surface of the plug base surface (31).

3. Plug element (30) according to either of Claims 1 and 2,
**characterized in that**
the plug body (35) has a centre axis (M) and/or a centre plane and two or more domes and/or ridges (33) are formed mirror-symmetrically and/or pointsymmetrically with respect to the centre axis (M) and/or with respect to the centre plane.

4. Plug element (30) according to any of the preceding claims,
**characterized in that**
at least one dome or ridge (33) is formed, which is free of contact elements (40) and is designed to form a support structure (34) for the enclosure (10) of the circuit carrier (20) composed of the encapsulation compound to (10').

5. Plug element (30) according to any of the preceding claims,
**characterized in that**
all of the contact elements (40) extend together through exactly one dome or ridge (33) and the dome or ridge (33) is arranged in particular opposite to a centre region of the plug base surface (31) or all of the contact elements (40) each extend individually through exactly one dome or ridge (33), in particular in a straight line.

6. Plug element (30) according to any of Claims 1 to 4,
**characterized in that**
two or more domes and/or ridges (33) are formed, wherein at least two or more contact elements (30) extend through all of the domes and/or ridges (33) or, at least in a subgroup comprising at least one dome or ridge (33), at least two or more contact elements (40) each extend through one dome or ridge (33).

7. Plug element (30) according to any of Claims 3 to 6,
**characterized in that**,
in the case of three or more domes or ridges (33), the domes or ridges (33) arranged further to the outside relative to the centre axis (M) of the plug body (35) have a higher elasticity than the domes or ridges (33) arranged further to the inside, wherein the higher elasticity is preferably caused by a smaller cross section of the respective domes or ridges (33) and/or by a larger length dimension of the respective domes or ridges (33) and/or by a smaller number of contained contact elements (40) within the respective domes or ridges (33) and/or by a smaller cross section of the contact elements (40) arranged within the respective domes or ridges (33).

8. Plug element (30) according to any of Claims 3 to 7,
**characterized in that**
three or more domes or ridges (33) are arranged at a grid spacing from the centre axis (M), wherein the domes or ridges (33) arranged further to the outside are arranged with an increasingly smaller grid spacing.

9. Plug element (30) according to any of the preceding claims,
**characterized in that**
the plug element (30) has two or more in particular parallel rows (I, II, III) of contact elements (40), wherein a row (I, II, III) of two or more contact elements (40) is formed in a line arrangement or in a circular arrangement, and wherein only adjacent contact elements (40) from the same row (I, II, III) or only adjacent contact elements (40) from different rows (I, II, III) or at least two adjacent contact elements (40) from the same and at least one further row (I, II, III) extend within one dome or ridge (33).

10. Plug element (30) according to any of the preceding claims,
**characterized in that**
at least one anchoring element (39.1) for the encapsulation compound is formed on at least one or all of the domes and/or ridges (33) within the connecting region (13), in particular as a local raised portion or recess, and/or in particular a fastening element (39.2) or a sealing element (39.3) for a mould (60) when connecting the plug body (35) to the encapsulation compound (10').

11. Electronics module (100) comprising a populated circuit carrier (20) and a plug element (30) according to any of the preceding claims, wherein the plug element (30), by way of its connection side (A), is electrically contact-connected with the circuit carrier (20) and the circuit carrier (20) and the contact elements (40) are in particular completely covered by an encapsulation compound (10') on the connection side (A) of the plug element (30) so as to form an enclosure (10) of the electronics module (100), wherein the at least one or further domes or ridges (33) of the plug body (35) as a connecting region (13) of the plug element (30) is/are embedded in the encapsulation compound (10') at least in regions, as a result of which the plug body (35) is materially connected to the enclosure (10) via the connecting region (13).

12. Electronics module (100) according to Claim 11,
**characterized in that**
the encapsulation compound (10') extends only over a partial height of the at least one or further domes or ridges (33), wherein there is a gap spacing (X, X') between the enclosure (10) and the remaining plug body (35), wherein in particular the enclosure (10) has an increasingly larger gap spacing (X, X') from the rest of the plug body (35) as the lateral distance from a centre axis (M) and/or a centre plane of the plug element (30) increases.

13. Electronics module (100) according to either of Claims 11 and 12,
**characterized in that**
the enclosure (10) is recessed in an at least locally limited manner in the region of at least one dome or ridge (33) embedded at least in regions in the encapsulation compound (10'), in particular between two immediately adjacent domes or ridges (33).

14. Method for forming an electronics module (100) according to any of Claims 11 to 13, comprising the following method steps:
a) electrically contact-connecting the connection side (A) of the plug element (30) with a populated circuit carrier (20) so as to form a module contact arrangement (100'),
b) inserting the module contact arrangement (100') inside a cavity (61) of a mould (60), wherein the cavity (61) replicates an outer shape of the enclosure (10) of the electronics module (100) and the at least one or further domes or ridges (33) protrude into the cavity (61) at least in regions as a connecting region (13) of the plug element (30),
c) completely filling the cavity (61) with an encapsulation compound (10') in a flowable state under process conditions, in particular a process temperature for the encapsulation compound (10') in the flowable state, wherein the circuit carrier (20), the contact elements (40) on the connection side (A) of the plug element (30) and the connecting region (13) of the plug element (30) are covered by the encapsulation compound (10'),
d) solidifying the encapsulation compound (10') so as to form the enclosure (10) of the electronics module (100), wherein the plug element (30) is materially connected to the enclosure (10) in the connecting region (13) and the enclosure (10) is formed with a gap spacing (X, X') from the rest of the plug body.

15. Method according to Claim 14,
**characterized in that**
the enclosure (10) is mechanically prestressed on the mould side in the region of the at least one dome or ridge (33) during method step b), as a result of which a stress state is induced within the at least one dome or ridge (33), wherein a mould-side prestress level is set, which takes into account locally different shrinkage levels of the plug body (30) and the enclosure (10) during cooling of the encapsulation compound (10') in method step d) from the process temperature to a demoulding temperature, so that, after the mould-side mechanical prestress (V) has been removed, in particular after demoulding from the cavity (61), the induced stress state is reduced by final differential shrinkage of the plug body (35) and the enclosure (10).

## Revendications

1. Elément de fiche (30) avec un côté enfichable (S), qui sert à établir un contact électrique direct avec une fiche homologue (30'), et avec un côté de raccordement (A), qui sert à établir un contact électrique direct avec un support de circuit (20), comprenant au moins quatre éléments de contact (40) ou plus pour établir le contact électrique respectif, les au moins quatre éléments de contact (40) ou plus entre le côté enfichable (S) et le côté de raccordement (A) étant entourés de manière étanche par un corps de fiche (35) électriquement isolant et dépassant chacun librement côté extrémité du corps de fiche (35), les éléments de contact (40) traversant sur le côté enfichable (S) une zone de base (31) de fiche formée par le corps de fiche (35),
**caractérisé en ce que**
le corps de fiche (35) comporte sur le côté de raccordement (A) au moins un ou d'autres dômes et/ou nervures (33) faisant saillie, lesquels dômes et/ou lesquelles nervures forment respectivement côté extrémité une face de terminaison (33') du corps de fiche (35), tous les éléments de contact (40) s'étendant sur une section longitudinale respective à l'intérieur d'un ou d'autres dômes et/ou nervures (33) et traversant alors chacun au moins une ou d'autres surfaces de terminaison (33'), et l'au moins un dôme et/ou l'au moins une nervure ou d'autres dômes et/ou nervures étant formés pour fournir une zone de liaison (13) de l'élément de fiche (30) pour une masse d'enrobage (10') afin de lier par liaison de matière le corps de fiche (35) à un boîtier (10) du support de circuit (20) réalisé à partir de la masse d'enrobage (10') lorsque l'élément de fiche (30) est en contact avec le support de circuit (20).

2. Elément de fiche (30) selon la revendication 1,
**caractérisé en ce que**
une somme de toutes les surfaces de terminaison (33') du dôme ou de la nervure ou d'autres dômes ou nervures (33) est inférieure à la surface de base (31) de fiche et sont disposées en particulier à l'intérieur d'une surface de projection perpendiculaire de la surface de base (31) de fiche.

3. Elément de fiche (30) selon l'une des revendications 1 ou 2,
**caractérisé en ce que**
le corps de fiche (35) comporte un axe central (M) et/ou un plan central et au moins deux dômes et/ou nervures (33) ou plus sont formés en symétrie miroir et/ou en symétrie ponctuelle par rapport à l'axe central (M) et/ou par rapport au plan central.

4. Elément de fiche (30) selon l'une des revendications précédentes,
**caractérisé en ce que**
au moins un dôme ou une nervure (33) est formé(e), lequel ou laquelle est sans éléments de contact (40) et est formé(e) pour former une structure de support (34) pour le boîtier (10) du support de circuit (20) réalisé à partir de la masse d'enrobage à (10').

5. Elément de fiche (30) selon l'une des revendications précédentes,
**caractérisé en ce que**
tous les éléments de contact (40) s'étendent ensemble à travers exactement un dôme ou une nervure (33) et le dôme ou la nervure (33) est disposé(e) en particulier en vis-à-vis par rapport à une zone centrale de la surface de base (31) de fiche ou tous les éléments de contact (40) s'étendent chacun individuellement à travers exactement un dôme ou une nervure (33), en particulier en ligne droite.

6. Elément de fiche (30) selon l'une des revendications 1 à 4,
**caractérisé en ce que**
deux dômes et/ou nervures (33) ou plus sont formés, au moins deux éléments de contact (30) ou plus s'étendant à travers tous les dômes et/ou toutes les nervures (33) ou au moins deux éléments de contact (40) ou plus s'étendant à travers respectivement un dôme ou une nervure (33) au moins dans un groupe partiel comprenant au moins un dôme ou une nervure (33).

7. Elément de fiche (30) selon l'une des revendications 3 à 6,
**caractérisé en ce que**
pour trois dômes ou nervures (33) ou plus, les dômes ou nervures (33) disposés respectivement plus à l'extérieur présentent une élasticité plus élevée par rapport à l'axe central (M) du corps de fiche (35) que les dômes ou nervures (33) disposés respectivement plus à l'intérieur, l'élasticité plus élevée étant due de manière préférée à une section transversale plus petite des dômes ou nervures (33) respectifs et/ou à une plus grande dimension longitudinale des dômes ou nervures (33) respectifs et/ou à un nombre plus petit d'éléments de contact (40) contenus à l'intérieur des dômes ou nervures (33) et/ou à une section transversale plus petite des éléments de contact (40) disposés à l'intérieur des dômes ou nervures (33) respectifs.

8. Elément de fiche (30) selon l'une des revendications 3 à 7,
**caractérisé en ce que**
trois dômes ou nervures (33) ou plus sont éloignés par rapport à l'axe central (M) à un intervalle, les dômes ou nervures (33) disposés respectivement plus à l'extérieur étant disposés avec une dimension d'intervalle de plus en plus petite.

9. Elément de fiche (30) selon l'une des revendications précédentes,
**caractérisé en ce que**
l'élément de fiche (30) comporte deux rangées en particulier parallèles (I, II, III) ou plus d'éléments de contact (40), une rangée (I, II, III) de deux éléments de contact (40) ou plus étant formée de manière linéaire ou circulaire, des éléments de contact (40) exclusivement adjacents de la même rangée (I, II, III) ou des éléments de contact (40) exclusivement adjacents de différentes rangées (I, II, III) ou au moins deux éléments de contact (40) adjacents de la même rangée et au moins d'une autre rangée (I, II, III) s'étendant à l'intérieur d'un dôme ou d'une nervure (33).

10. Elément de fiche (30) selon l'une des revendications précédentes,
**caractérisé en ce que**
au moins un élément d'engrènement (39.1) pour la masse d'enrobage est formé sur au moins un ou une ou tous les dômes et/ou nervures (33) à l'intérieur de la zone de liaison (13), en particulier comme une partie surélevée locale ou un renfoncement local, et/ou en particulier un élément de fixation (39.2) ou un élément d'étanchéification (39.3) pour un outil (60) lorsque le corps de fiche (35) est fixé à la masse d'enrobage (10').

11. Module électronique (100), comprenant un support de circuit (20) équipé et un élément de fiche (30) selon l'une des revendications précédentes, l'élément de fiche (30) étant mis en contact électrique avec le support de circuit (20) par son côté de raccordement (A) et le support de circuit (20) et les éléments de contact (40) étant en particulier totalement recouverts sur le côté de raccordement (A) de l'élément de fiche (30) d'une masse d'enrobage (10') tout en formant un boîtier (10) du module électronique (100), l'au moins un/l'au moins une ou d'autres dômes ou nervures (33) du corps de fiche (35) étant intégrés dans la masse d'enrobage (10') au moins par endroits en tant qu'une zone de liaison (13) de l'élément de fiche (30), ce qui permet de lier par liaison de matière le corps de fiche (35) au boîtier (10) par la zone de liaison (13).

12. Module électronique (100) selon la revendication 11,
**caractérisé en ce que**
la masse d'enrobage (10') ne s'étend que sur une hauteur partielle de l'au moins un/une ou d'autres dômes ou nervures (33), un espacement (X, X') étant présent entre le boîtier (10) et le reste du corps de fiche (35), le boîtier (10) comportant en particulier un espacement (X, X') de plus en plus grand par rapport au reste du corps de fiche (35) à mesure que l'éloignement latéral par rapport à un axe central (M) et/ou à un plan central de l'élément de fiche (30) augmente.

13. Module électronique (100) selon l'une des revendications 11 ou 12,
**caractérisé en ce que**
le boîtier (10) est décalé avec un renfoncement au moins limité localement dans la zone d'au moins un dôme ou une nervure (33) intégré(e) au moins par endroits dans la masse d'enrobage (10'), en particulier entre deux dômes ou nervures (33) adjacents les plus proches.

14. Procédé de formation d'un module électronique (100) selon l'une des revendications 11 à 13, avec les étapes de procédé suivantes :
a) mise en contact électrique du côté de raccordement (A) de l'élément de fiche (30) avec un support de circuit (20) équipé tout en formant un ensemble de contact de module (100'),
b) insertion de l'ensemble de contact de module (100') à l'intérieur d'une cavité (61) d'un outil (60), la cavité (61) reproduisant une forme extérieure du boîtier (10) du module électronique (100) et l'au moins un ou une ou d'autres dômes ou nervures (33) dépassant dans la cavité (61) au moins par endroits en tant que zone de liaison (13) de l'élément de fiche (30),
c) remplissage total de la cavité (61) d'une masse d'enrobage (10') dans un état fluide dans des conditions de processus, en particulier à une température de processus pour la masse d'enrobage (10') dans l'état fluide, le support de circuit (20), les éléments de contact (40) sur le côté de raccordement (A) de l'élément de fiche (30) et la zone de liaison (13) de l'élément de fiche (30) étant recouverts de la masse d'enrobage (10'),
d) solidification de la masse d'enrobage (10') tout en formant le boîtier (10) du module électronique (100), l'élément de fiche (30) étant lié par liaison de matière au boîtier (10) dans la zone de liaison (13) et le boîtier (10) étant formé à un espacement (X, X') par rapport au reste du corps de fiche.

15. Procédé selon la revendication 14,
**caractérisé en ce que**
au cours de l'étape de procédé b), le boîtier (10) est précontraint mécaniquement côté outil dans la zone de l'au moins dôme ou de l'au moins une nervure (33), ce qui permet d'imprimer un état de contrainte à l'intérieur de l'au moins un dôme ou de l'au moins une nervure (33), une mesure de précontrainte côté outil étant réglée, qui tient compte de dimensions de rétrécissement localement différentes du corps de fiche (30) et du boîtier (10) lors d'un refroidissement de la masse d'enrobage (10') dans l'étape de procédé d), de la température de processus à une température de démoulage, de telle sorte qu'après la suppression de la précontrainte mécanique (V) côté outil, en particulier après un démoulage de la cavité (61), l'état de contrainte imprimé est réduit par le rétrécissement final différent du corps de fiche (35) et du boîtier (10).
